# EUROPEAN PATENT APPLICATION

(11) **EP 4 808 176 A1**
(43) Date of publication of application: **16.09.2026**
(21) Application number: 24893483.8
(22) Date of filing: 20.11.2024
(51) Int. Cl.: H04W 12/04

(54) **COMMUNICATION METHOD AND COMMUNICATION APPARATUS**

(30) Priority: 24.11.2023 CN 202311600455
(71) Applicant: Huawei Technologies Co., Ltd., Shenzhen, Guangdong 518129 (CN)
(72) Inventor: GUO, Yanfei, Shenzhen, Guangdong 518129 (CN); GUO, Longhua, Shenzhen, Guangdong 518129 (CN); WU, Yizhuang, Shenzhen, Guangdong 518129 (CN)
(74) Representative: Pfenning, Meinig & Partner mbB
(86) International application number: PCT/CN2024/133285
(87) International publication number: WO 2025/108327

(57) **Abstract**

This application provides a communication method and a communication device. The method includes: A network device receives first indication information indicating a length of a first key, where the first key is a key of a terminal device; the network device determines a first security algorithm based on the length of the first key, where a length of an input key of the first security algorithm is less than or equal to the length of the first key; and the network device transmits a message with the terminal device, where the message is a message on which security protection is performed based on the first security algorithm. The network device can determine a proper security algorithm based on the key of the terminal device, thereby saving compute resources. A length of an input key of the security algorithm may be less than or equal to the length of the first key.

## Description

This application claims priority to Chinese Patent Application No. 202311600455.2, filed with the China National Intellectual Property Administration on November 24, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

A terminal device and a network side may negotiate a security protection algorithm, to protect a message transmitted between the terminal device and the network side. For example, the terminal device and the network side may negotiate, based on a non-access stratum (non-access stratum, NAS) security mode control procedure (security mode control procedure, SMC) and an access stratum (access stratum, AS) security mode control procedure, an algorithm required for confidentiality security protection and integrity security protection. When a subscriber identity identification module of the terminal device supports storage of keys of a plurality of lengths and the terminal device supports a plurality of security protection algorithms, how to determine a proper security protection algorithm needs to be considered. The terminal device and the network side may negotiate the security protection algorithm, to protect the message transmitted between the terminal device and the network side. For example, the terminal device and the network side may negotiate, based on the non-access stratum (non-access stratum, NAS) security mode control procedure (security mode control procedure, SMC) and the access stratum (access stratum, AS) security mode control procedure, the algorithm required for confidentiality security protection and integrity security protection. When the subscriber identity identification module of the terminal device supports storage of keys of a plurality of lengths and the terminal device supports a plurality of security protection algorithms, how to determine a proper security protection algorithm needs to be considered.

### SUMMARY

This application provides a communication method and a communication apparatus, so that a proper security protection algorithm can be selected, thereby saving compute resources.

According to a first aspect, a communication method is provided. The method may be performed by a network device, or may be performed by a component (for example, a chip or a circuit) of the network device. This is not limited in this application.

The method includes: The network device receives first indication information, where the first indication information indicates a length of a first key, and the first key is a key of a terminal device; the network device determines a first security algorithm based on the length of the first key, where a length of an input key of the first security algorithm is less than or equal to the length of the first key; and the network device transmits a message with the terminal device, where the message is a message on which security protection is performed based on the first security algorithm.

Alternatively,the method includes: The network device receives first indication information, where the first indication information indicates a length of a first key, and the first key is a key of a terminal device; and the network device transmits a message to the terminal device, where the message is a message on which security protection is performed based on a first security algorithm, the first security algorithm is determined based on the length of the first key, and a length of an input key of the first security algorithm is less than or equal to the length of the first key.

Based on the foregoing solution, the network device can determine a proper security algorithm based on the key of the terminal device, thereby saving compute resources. A length of an input key of the security algorithm may be less than or equal to the length of the first key.

With reference to the first aspect, in some implementations of the first aspect, the network device is a first core network device, and the network device receives the first indication information from a second core network device and/or the terminal device.

With reference to the first aspect, in some implementations of the first aspect, the network device is an access network device, and the network device receives the first indication information from a first core network device and/or the terminal device.

With reference to the first aspect, in some implementations of the first aspect, the network device determines the first security algorithm based on the length of the first key, security capability information of the terminal device, and an algorithm priority list, where the security capability information of the terminal device indicates security algorithms supported by the terminal device, and the algorithm priority list indicates priorities of security algorithms supported by a network side.

With reference to the first aspect, in some implementations of the first aspect, the first security algorithm is one of the security algorithms supported by the terminal device, the length of the input key of the first security algorithm is less than or equal to the length of the first key, a priority of the first security algorithm is higher than a priority of a second security algorithm in the algorithm priority list, and the second security algorithm includes a security algorithm, other than the first security algorithm, that is in the security algorithms supported by the terminal device and has an input key whose length is less than or equal to the length of the first key.

With reference to the first aspect, in some implementations of the first aspect, the network device determines a length of a security key based on the first security algorithm, where the security key is a key used by the security algorithm, and the length of the security key is the same as the length of the input key of the first security algorithm.

With reference to the first aspect, in some implementations of the first aspect, the network device sends second indication information to the terminal device, where the second indication information indicates the length of the first key, the length of the first key is used to determine a length of a key output by a key derivation algorithm, the output key is used to generate a security key, and the security key is a key used by the security algorithm.

According to a second aspect, a communication method is provided. The method may be performed by a terminal device, or may be performed by a component (for example, a chip or a circuit) of the terminal device. This is not limited in this application.

The method includes: sending first indication information to a network device, where the first indication information indicates a length of a first key, the first key is a key of the terminal device, the length of the first key is used by a first core network device to determine a length of an input key of a first security algorithm, and the length of the input key of the first security algorithm is less than or equal to the length of the first key; and transmitting a message with the network device, where the message is a message on which security protection is performed based on the first security algorithm.

Based on the foregoing solution, the length of the first key is indicated to the network device, so that the network device can determine a proper security algorithm based on the key of the terminal device, thereby saving compute resources. A length of an input key of the security algorithm may be less than or equal to the length of the first key.

With reference to the second aspect, in some implementations of the second aspect, before the first indication information is sent to the network device, the length of the first key is obtained from a subscriber identity identification module.

With reference to the second aspect, in some implementations of the second aspect, before the message is transmitted with the network device, a length of a key output by a key derivation algorithm is determined based on the length of the first key, where the key output by the key derivation algorithm is used to generate a security key, and the security key is a key used by the first security algorithm.

According to a third aspect, a communication method is provided. The method may be performed by a second core network device, or may be performed by a component (for example, a chip or a circuit) of the second core network device. This is not limited in this application.

The method includes: determining a length of a first key of a terminal device; and sending first indication information to a first core network device, where the first indication information indicates the length of the first key, the length of the first key is used to determine a length of an input key of a first security algorithm, the length of the input key of the first security algorithm is less than or equal to the length of the first key, and the first security algorithm is used to perform security protection on a message transmitted with the terminal device.

Based on the foregoing solution, the length of the first key is determined and indicated to a network device, so that the network device can determine a proper security algorithm based on the key of the terminal device, thereby saving compute resources. A length of an input key of the security algorithm may be less than or equal to the length of the first key.

With reference to the third aspect, in some implementations of the third aspect, identification information of the terminal device is received from the first core network device; and the length of the first key is determined based on the identification information of the terminal device.

With reference to the third aspect, in some implementations of the third aspect, a length of a key output by a key derivation algorithm is determined based on the length of the first key, where the output key is used to generate a security key, and the security key is a key used by the security algorithm.

According to a fourth aspect, a communication method is provided. The method may be performed by a terminal device, or may be performed by a component (such as a chip or a circuit) of the terminal device. This is not limited in this application.

The method includes: sending security capability information of the terminal device to a network device, where the security capability information indicates security algorithms supported by the terminal device, lengths of input keys of the security algorithms supported by the terminal device are less than or equal to a length of a first key, the first key is a key of the terminal device, and the security capability information of the terminal device is used by a first core network device to determine a first security algorithm; and transmitting a message with the network device, where the message is a message on which security protection is performed based on the first security algorithm.

Based on the foregoing solution, the security capability information of the terminal device is sent to the network device, and the lengths of the input keys of the security algorithms that are indicated by the security capability information and that are supported by the terminal device are less than or equal to the length of the first key, so that the network device can determine a proper security algorithm based on the security capability information of the terminal device, thereby saving compute resources.

With reference to the fourth aspect, in some implementations of the fourth aspect, before the security capability information of the terminal device is sent to the network device, the length of the first key is obtained from a subscriber identity identification module.

With reference to the fourth aspect, in some implementations of the fourth aspect, before the message is transmitted with the network device, the security capability information of the terminal device to be sent to the network device is determined based on the length of the first key and security capability information configured in the terminal device.

With reference to the fourth aspect, in some implementations of the fourth aspect, before the message is transmitted with the network device, a length of a key output by a key derivation algorithm is determined based on the length of the first key, where the key output by the key derivation algorithm is used to generate a security key, and the security key is a key used by the first security algorithm.

According to a fifth aspect, a communication method is provided. The method may be performed by a network device, or may be performed by a component (such as a chip or a circuit) of the network device. This is not limited in this application.

The method includes: receiving security capability information of a terminal device, where the security capability information indicates security algorithms supported by the terminal device, lengths of input keys of the security algorithms supported by the terminal device are less than or equal to a length of a first key, and the first key is a key of the terminal device; and transmitting a message with the terminal device, where the message is a message on which security protection is performed based on a first security algorithm, and the first security algorithm is one of the security algorithms supported by the terminal device.

Based on the foregoing solution, the security capability information of the terminal device is sent to the network device, and the lengths of the input keys of the security algorithms that are indicated by the security capability information and that are supported by the terminal device are less than or equal to the length of the first key, so that the network device can determine a proper security algorithm based on the security capability information of the terminal device, thereby saving compute resources.

With reference to the fifth aspect, in some implementations of the fifth aspect, before the message is transmitted with the terminal device, the first security algorithm is determined based on the security capability information of the terminal device and an algorithm priority list, where a priority of the first security algorithm is higher than that of a security algorithm, other than the first security algorithm, that is included in the algorithm priority list and that is supported by the terminal device.

With reference to the fifth aspect, in some implementations of the fifth aspect, a length of a security key is determined based on the first security algorithm, where the security key is a key used by the security algorithm, and the length of the security key is the same as a length of an input key of the first security algorithm.

According to a sixth aspect, a communication apparatus is provided. The apparatus includes a transceiver unit and a processing unit. The transceiver unit is configured to receive first indication information, where the first indication information indicates a length of a first key, and the first key is a key of a terminal device; and the processing unit is configured to determine a first security algorithm based on the length of the first key, and a length of an input key of the first security algorithm is less than or equal to the length of the first key. The apparatus transmits a message with the terminal device, where the message is a message on which security protection is performed based on the first security algorithm.

With reference to the sixth aspect, in some implementations of the sixth aspect, the apparatus is a first core network device, and the transceiver unit is specifically configured to receive the first indication information from a second core network device and/or the terminal device.

With reference to the sixth aspect, in some implementations of the sixth aspect, the apparatus is an access network device, and the transceiver unit is specifically configured to receive the first indication information from a first core network device and/or the terminal device.

With reference to the sixth aspect, in some implementations of the sixth aspect, the processing unit is specifically configured to determine the first security algorithm based on the length of the first key, security capability information of the terminal device, and an algorithm priority list, where the security capability information of the terminal device indicates security algorithms supported by the terminal device, and the algorithm priority list indicates priorities of security algorithms supported by a network side.

With reference to the sixth aspect, in some implementations of the sixth aspect, the first security algorithm is one of the security algorithms supported by the terminal device, the length of the input key of the first security algorithm is less than or equal to the length of the first key, a priority of the first security algorithm is higher than a priority of a second security algorithm in the algorithm priority list, and the second security algorithm includes a security algorithm, other than the first security algorithm, that is in the security algorithms supported by the terminal device and has an input key whose length is less than or equal to the length of the first key.

With reference to the sixth aspect, in some implementations of the sixth aspect, the processing unit is further configured to determine a length of a security key based on the first security algorithm, where the security key is a key used by the security algorithm, and the length of the security key is the same as the length of the input key of the first security algorithm.

With reference to the sixth aspect, in some implementations of the sixth aspect, the transceiver unit is further configured to send second indication information to the terminal device, where the second indication information indicates the length of the first key, the length of the first key is used to determine a length of a key output by a key derivation algorithm, the output key is used to generate a security key, and the security key is a key used by the security algorithm.

According to a seventh aspect, a communication apparatus is provided. The apparatus includes a transceiver unit. The transceiver unit is configured to send first indication information to a network device, where the first indication information indicates a length of a first key, the first key is a key of a terminal device, the length of the first key is used by a first core network device to determine a length of an input key of a first security algorithm, and the length of the input key of the first security algorithm is less than or equal to the length of the first key; and the transceiver unit is further configured to transmit a message with the network device, where the message is a message on which security protection is performed based on the first security algorithm.

With reference to the seventh aspect, in some implementations of the seventh aspect, the apparatus further includes a processing unit, and the processing unit is configured to obtain, before the first indication information is sent to the network device, the length of the first key from a subscriber identity identification module.

With reference to the seventh aspect, in some implementations of the seventh aspect, before the message is transmitted with the network device, the processing unit is further configured to determine a length of a key output by a key derivation algorithm based on the length of the first key, where the key output by the key derivation algorithm is used to generate a security key, and the security key is a key used by the first security algorithm.

According to an eighth aspect, a communication apparatus is provided. The apparatus includes a transceiver unit and a processing unit. The processing unit is configured to determine a length of a first key of a terminal device; and the transceiver unit is configured to send first indication information to a first core network device, where the first indication information indicates the length of the first key, the length of the first key is used to determine a length of an input key of a first security algorithm, the length of the input key of the first security algorithm is less than or equal to the length of the first key, and the first security algorithm is used to perform security protection on a message transmitted with the terminal device.

With reference to the eighth aspect, in some implementations of the eighth aspect, the transceiver unit is specifically configured to receive identification information of the terminal device from the first core network device; and the transceiver unit is further configured to determine the length of the first key based on the identification information of the terminal device.

With reference to the eighth aspect, in some implementations of the eighth aspect, the processing unit is further configured to determine a length of a key output by a key derivation algorithm based on the length of the first key, where the output key is used to generate a security key, and the security key is a key used by the security algorithm.

According to a ninth aspect, a communication apparatus is provided. The apparatus includes a transceiver unit. The transceiver unit is configured to send security capability information of the apparatus to a network device, where the security capability information indicates security algorithms supported by the apparatus, lengths of input keys of the security algorithms supported by the apparatus are less than or equal to a length of a first key, the first key is a key of the apparatus, and the security capability information of the apparatus is used by a first core network device to determine a first security algorithm; and the transceiver unit is configured to transmit a message with the network device, where the message is a message on which security protection is performed based on the first security algorithm.

With reference to the ninth aspect, in some implementations of the ninth aspect, the apparatus further includes a processing unit, and the processing unit is configured to obtain, before the security capability information of the apparatus is sent to the network device, the length of the first key from a subscriber identity identification module.

With reference to the ninth aspect, in some implementations of the ninth aspect, the processing unit is further configured to determine, before the message is transmitted with the network device, the security capability information of the apparatus to be sent to the network device based on the length of the first key and security capability information configured in the apparatus.

With reference to the ninth aspect, in some implementations of the ninth aspect, the processing unit is further configured to determine, before the message is transmitted with the network device, a length of a key output by a key derivation algorithm based on the length of the first key, where the key output by the key derivation algorithm is used to generate a security key, and the security key is a key used by the first security algorithm.

According to a tenth aspect, a communication apparatus is provided. The apparatus includes a transceiver unit and a processing unit. The transceiver unit is configured to receive security capability information of a terminal device, where the security capability information indicates security algorithms supported by the terminal device, lengths of input keys of the security algorithms supported by the terminal device are less than or equal to a length of a first key, and the first key is a key of the terminal device; and the transceiver unit is further configured to transmit a message with the terminal device, where the message is a message on which security protection is performed based on a first security algorithm, and the first security algorithm is one of the security algorithms supported by the terminal device.

With reference to the tenth aspect, in some implementations of the tenth aspect, the apparatus further includes a processing unit, and the processing unit is configured to determine, before the message is transmitted with the terminal device, the first security algorithm based on the security capability information of the terminal device and an algorithm priority list, where a priority of the first security algorithm is higher than that of a security algorithm that is included in the algorithm priority list and that is supported by the terminal device other than the first security algorithm.

With reference to the tenth aspect, in some implementations of the tenth aspect, the processing unit is further configured to determine a length of a security key based on the first security algorithm, where the security key is a key used by the security algorithm, and the length of the security key is the same as a length of an input key of the first security algorithm.

According to an eleventh aspect, a communication apparatus is provided, including a processor. The processor is coupled to a memory, and may be configured to execute instructions in the memory, to implement the method according to the first aspect and the fifth aspect and any possible implementation of the first aspect and the fifth aspect. Optionally, the communication apparatus further includes the memory. Optionally, the communication apparatus further includes a communication interface, and the processor is coupled to the communication interface.

In an implementation, the communication apparatus is a network device. When the communication apparatus is the network device, the communication interface may be a transceiver or an input/output interface.

In another implementation, the communication apparatus is a chip configured in a network device. When the communication apparatus is the chip configured in the network device, the communication interface may be an input/output interface.

Optionally, the transceiver may be a transceiver circuit. Optionally, the input/output interface may be an input/output circuit.

According to a twelfth aspect, a communication apparatus is provided, including a processor. The processor is coupled to a memory, and may be configured to execute instructions in the memory, to implement the method according to the second aspect and the fourth aspect and any possible implementation of the second aspect and the fourth aspect. Optionally, the communication apparatus further includes the memory. Optionally, the communication apparatus further includes a communication interface, and the processor is coupled to the communication interface.

In an implementation, the communication apparatus is a terminal device. When the communication apparatus is the terminal device, the communication interface may be a transceiver or an input/output interface.

In another implementation, the communication apparatus is a chip configured in a terminal device. When the communication apparatus is the chip configured in the terminal device, the communication interface may be an input/output interface.

According to a thirteenth aspect, a communication apparatus is provided, including a processor. The processor is coupled to a memory, and may be configured to execute instructions in the memory, to implement the method according to the third aspect and any possible implementation of the third aspect. Optionally, the communication apparatus further includes the memory. Optionally, the communication apparatus further includes a communication interface, and the processor is coupled to the communication interface.

In an implementation, the communication apparatus is a second core network device. When the communication apparatus is the second core network device, the communication interface may be a transceiver or an input/output interface.

In another implementation, the communication apparatus is a chip configured in a second core network device. When the communication apparatus is the chip configured in the second core network device, the communication interface may be an input/output interface.

According to a fourteenth aspect, a processor is provided, including an input circuit, an output circuit, and a processing circuit. The processing circuit is configured to: receive a signal through the input circuit, and transmit a signal through the output circuit, so that the processor performs the method according to any possible implementation of the first aspect to the fifth aspect.

During specific implementation, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by a receiver. A signal output by the output circuit may be output to a transmitter and transmitted by the transmitter. In addition, the input circuit and the output circuit may be a same circuit, and the circuit serves as the input circuit and the output circuit at different moments. Specific implementations of the processor and the various circuits are not limited in embodiments of this application.

According to a fifteenth aspect, a processing apparatus is provided, including a processor and a memory. The processor is configured to read instructions stored in the memory, and may receive a signal through a receiver, and transmit a signal through a transmitter, to perform the method according to any possible implementation of the first aspect to the fifth aspect.

Optionally, there are one or more processors, and there are one or more memories.

Optionally, the memory and the processor may be integrated together or separately disposed.

During specific implementation, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

It should be understood that, a related data exchange process such as sending of indication information may be a process of outputting the indication information from the processor, and receiving of capability information may be a process of receiving input capability information by the processor. Specifically, data output by the processor may be output to the transmitter, and input data received by the processor may be from the receiver. The transmitter and the receiver may be collectively referred to as a transceiver.

The processing apparatus according to the fifteenth aspect may be one or more chips. The processor in the processing apparatus may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a sixteenth aspect, a computer program product is provided. The computer program product includes a computer program (which may also be referred to as code or instructions). When the computer program is run, a computer is caused to perform the method according to any possible implementation of the first aspect to the fifth aspect.

According to a seventeenth aspect, a computer-readable storage medium is provided. The computer-readable storage medium stores a computer program (which may also be referred to as code or instructions). When the computer program is run on a computer, the method according to any possible implementation of the first aspect to the fifth aspect is performed.

According to an eighteenth aspect, a communication system is provided, including at least one of the terminal device, the network device, and the second core network device described above.

### BRIEF DESCRIPTION OF DRAWINGS

FIG. 1 is a diagram of a network architecture 100;
FIG. 2 is a diagram of a key architecture;
FIG. 3 is a schematic flowchart of a NAS SMC procedure;
FIG. 4 is a schematic flowchart of an AS SMC procedure;
FIG. 5 is a schematic flowchart of a communication method 500 according to this application;
FIG. 6 is a schematic flowchart of a communication method 600 according to this application;
FIG. 7 is a schematic flowchart of a communication method 700 according to this application;
FIG. 8 is a schematic flowchart of a communication method 800 according to this application;
FIG. 9 is a schematic flowchart of a communication method 800 according to this application;
FIG. 10 is a block diagram of a communication apparatus 10 according to an embodiment of this application;
FIG. 11 is a diagram of another communication apparatus 20 according to an embodiment of this application; and
FIG. 12 is a diagram of a chip system 30 according to an embodiment of this application.

### DESCRIPTION OF EMBODIMENTS

The following describes technical solutions of this application with reference to accompanying drawings.

The technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

In a communication system, a part operated by an operator may be referred to as a public land mobile network (public land mobile network, PLMN), which may also be referred to as an operator network or the like. The PLMN is a network established and operated by a government or an operator approved by the government to provide a land mobile communication service for the public, and is mainly a public network in which a mobile network operator (mobile network operator, MNO) provides a mobile broadband access service for a user. The PLMN described in embodiments of this application may be specifically a network that meets a 3GPP standard requirement, which is briefly referred to as a 3GPP network. The 3GPP network usually includes but is not limited to a 5G network, a 4th generation (4th generation, 4G) mobile communication network, and another future communication system like a 6th generation (6th generation, 6G) network. The technical solutions are also applicable to an SNPN (Standalone Non-Public Network).

For ease of description, the PLMN or the 5G network is used as an example for description in embodiments of this application.

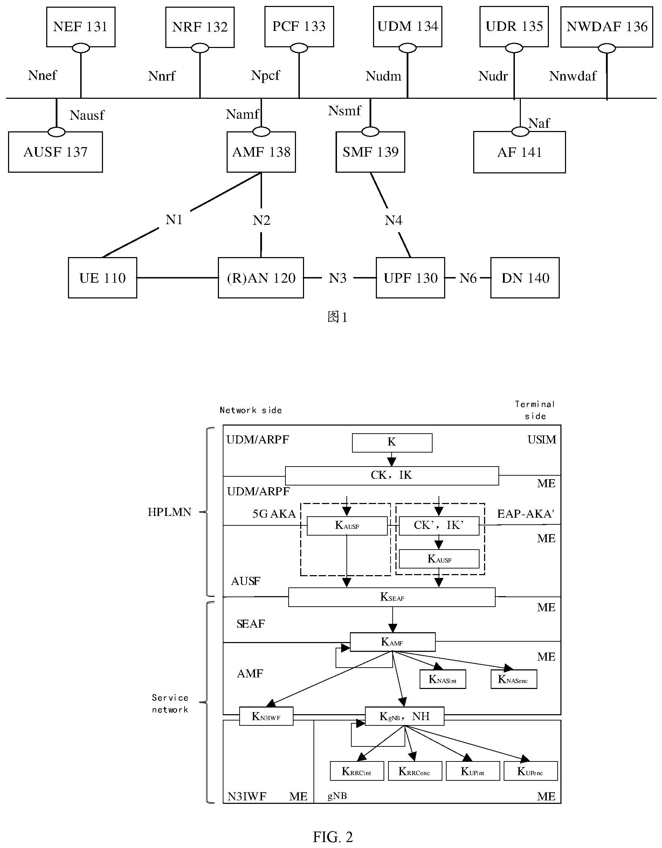

FIG. 1 is a diagram of a network architecture 100. A 5G network architecture based on a service-based architecture in a non-roaming scenario defined in a 3GPP standardization process is used as an example. As shown in the figure, the network architecture may include three parts: a terminal device part, a DN, and an operator network PLMN part. The following briefly describes functions of network elements of each part.

The terminal device part may include a terminal device 110, and the terminal device 110 may also be referred to as user equipment (user equipment, UE). The terminal device 110 in this application is a device having a wireless transceiver function, and may communicate with one or more core network (core network, CN) devices through an access network device (which may also be referred to as an access device) in a radio access network (radio access network, RAN) 140. The terminal device 110 may also be referred to as an access terminal, a terminal, a subscriber unit, a subscriber station, a mobile station, a remote station, a remote terminal, a mobile device, a user terminal, a user agent, a user apparatus, or the like. The terminal device 110 may be deployed on the land, including an indoor device, an outdoor device, a handheld device, or a vehicle-mounted device; may be deployed on the water (for example, on a ship); or may be deployed in the air (for example, on an airplane, a balloon, or a satellite). The terminal device 110 may be a cellular phone (cellular phone), a cordless phone, a session initiation protocol (session initiation protocol, SIP) phone, a smart phone (smart phone), a mobile phone (mobile phone), a wireless local loop (wireless local loop, WLL) station, a personal digital assistant (personal digital assistant, PDA), or the like. Alternatively, the terminal device 110 may be a handheld device having a wireless communication function, a compute device, another device connected to a wireless modem, a vehicle-mounted device, a wearable device, an uncrewed aerial vehicle device, a terminal in the internet of things or internet of vehicles, a terminal in any form in a 5G network or a future network, relay user equipment, a terminal in a future evolved 6G network, or the like. The relay user equipment may be, for example, a 5G residential gateway (residential gateway, RG). For example, the terminal device 110 may be a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), or a wireless terminal in a smart home (smart home). The terminal device herein is a 3GPP terminal. A type or the like of the terminal device is not limited in embodiments of this application. For ease of description, in this application, an example in which the UE represents the terminal device is used for description below.

The operator network PLMN part may include but is not limited to a (radio) access network ((radio) access network, (R)AN) 120 and a core network (core network, CN) part.

The (R)AN 120 may be considered as a sub-network of an operator network, and is an implementation system between a service node in the operator network and the terminal device 110. To access the operator network, the terminal device 110 first passes through the (R)AN 120, and then may be connected to the service node in the operator network through the (R)AN 120. The access network device (RAN device) in embodiments of this application is a device that provides a wireless communication function for the terminal device 110, and may also be referred to as a network device. The RAN device includes but is not limited to a next generation node base station (next generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission reception point (transmission reception point, TRP), a transmission point (transmission point, TP), a pico (piceo) base station, a mobile switching center, a network device in a future network, or the like. In systems using different radio access technologies, devices with functions of the access network device may have different names. For ease of description, in all embodiments of this application, the foregoing apparatuses that provide the wireless communication function for the terminal device 110 are collectively referred to as access network devices, or briefly referred to as RANs or ANs. It should be understood that a specific type of the access network device is not limited in this specification.

The CN part may include but is not limited to the following NFs: a user plane function (user plane function, UPF) 130, a network exposure function (network exposure function, NEF) 131, a network function repository function (network function repository function, NRF) 132, a policy control function (policy control function, PCF) 133, a unified data management (unified data management, UDM) function 134, a unified data repository (unified data repository, UDR) function 135, a network data analytics function (network data analytics function, NWDAF) 136, an authentication server function (authentication server function, AUSF) 137, an access and mobility management function (access and mobility management function, AMF) 138, and a session management function (session management function, SMF) 139.

A data network DN 140 may also be referred to as a packet data network (packet data network, PDN), and is usually a network located outside the operator network, for example, a third-party network. Certainly, in some implementations, the DN may alternatively be deployed by an operator, that is, the DN is a part of the PLMN. Whether the DN belongs to the PLMN is not limited in this application. The operator network PLMN may access a plurality of data networks DNs 140. The data network DN 140 may be deployed with a plurality of services, and may provide a data service, a voice service, and/or the like for the terminal device 110. For example, the data network DN 140 may be a private network of a smart factory, a sensor installed in a workshop of the smart factory may be the terminal device 110, a control server of the sensor is deployed in the data network DN 140, and the control server may provide a service for the sensor. The sensor may communicate with the control server to obtain instructions of the control server, transmit collected sensor data to the control server based on the instructions, and the like. For another example, the data network DN 140 may be an internal office network of a company, a mobile phone or a computer of an employee of the company may be the terminal device 110, and the mobile phone or the computer of the employee may access information, a data resource, and the like on the internal office network of the company. The terminal device 110 may setup a connection to the operator network through an interface (for example, N1) provided by the operator network, and use the data service, the voice service, and/or the like provided by the operator network. The terminal device 110 may further access the data network DN 140 through the operator network, and use an operator service deployed on the data network DN 140 and/or a service provided by a third party.

The following further briefly describes functions of the NFs included in the CN.
1. The UPF 130 is a gateway provided by the operator, and is a gateway for communication between the operator network and the data network DN 140. The UPF 130 includes user plane-related functions such as data packet routing and transmission, data packet detection, traffic usage reporting, quality of service (quality of service, QoS) handling, lawful interception, uplink data packet detection, and downlink data packet storage.
2. The NEF 131 is a control plane function provided by the operator, and mainly enables a third party to use a service provided by a network, support the network in opening a capability, an event, and data analysis of the network, convert security configuration information from an external application to the PLMN and exchange information inside and outside the PLMN, provide an API interface opened by the operator network, provide interaction between an external server and an internal operator network, and the like.
3. The NRF 132 is a control plane function provided by the operator, and may be configured to maintain real-time information of a network function and a service in the network. For example, the NRF supports network service discovery, maintains services supported by NF configuration data (an NF profile) of NF instances, supports service discovery of a communication proxy (service communication proxy, SCP), maintains SCP configuration data (an SCP profile) of SCP instances, sends notifications about newly registered, deregistered, and updated NFs and SCPs, maintains health statuses of NFs and SCPs, and the like.
4. The PCF 133 is a control plane function provided by the operator, and supports a unified policy framework to govern network behavior and provide subscription information related to a policy rule and policy decision for another control function.
5. The UDM 134 is a control plane function provided by the operator, and is responsible for storage of a subscription permanent identifier (subscription permanent identifier, SUPI) of a subscriber of the operator network, a generic public subscription identifier (generic public subscription identifier, GPSI) of the subscriber, a credential (credential), and other information.
   The SUPI is first confidentiality-protected in a transmission process, and a confidentiality-protected SUPI is referred to as a subscription concealed identifier (subscription concealed identifier, SUCI). The information stored in the UDM 134 may be used for authentication and authorization for accessing the operator network by the terminal device 110. The subscriber of the operator network may be specifically a user using a service provided by the operator network, for example, a user using a subscriber identity module (subscriber identity module, SIM) card of China Telecom or a user using a subscriber identity module card of China Mobile. The credential of the subscriber may be a long-term key stored in the subscriber identity module card, or a stored small file, for example, information related to encryption of the subscriber identity module card, and is used for authentication and/or authorization. It should be noted that the permanent identifier, the credential, a security context, authentication data (cookie), and a token are equivalent to information related to verification/authentication and authorization, and are not limited or distinguished between each other for ease of description in embodiments of this application.
6. The UDR 135 is a control plane function provided by the operator, and provides a function of storing and obtaining subscription data for the UDM, stores and obtains policy data for the PCF, stores and obtains NF group ID (group ID) information of a user, and the like.
7. The NWDAF 136 is a control plane function provided by the operator, and a main function of the NWDAF is to collect data from an NF, an external application function AF, an operation, administration and maintenance (operation, administration and maintenance, OAM) system, and the like, and provide the NF and the AF with NWDAF service registration, data exposure, data analysis, and the like. In this application, the NWDAF is mainly responsible for security-related data analysis. Therefore, in this application, the NWDAF may also be understood as a network element having a security analysis function. For example, the network element having a security analysis function is referred to as the NWDAF, and may have another network element name subsequently. This is not limited in this application.
8. The AUSF 137 is a control plane function provided by the operator, and is usually used for primary authentication, that is, authentication between the terminal device 110 (a subscriber) and the operator network. After receiving an authentication request initiated by the subscriber, the AUSF 137 may perform authentication and/or authorization on the subscriber by using authentication information and/or authorization information stored in the UDM 134, or generate authentication information and/or authorization information of the subscriber by using the UDM 134. The AUSF 137 may feed back the authentication information and/or the authorization information to the subscriber.
9. The AMF 138 is a control plane network function provided by the operator network, and is responsible for access control and mobility management when the terminal device 110 accesses the operator network, for example, including functions such as mobility status management, allocation of a temporary user identity, and user authentication and authorization.
   The AMF 138 is configured to perform a non-access stratum (non-access stratum, NAS) connection to UE, and has a same 5G NAS security context as the UE. The 5G NAS security context may include a K_{AMF}, key identifier information that is the same as a NAS hierarchy key, a UE security capability (UE security capability), an uplink NAS count value, and a downlink NAS count value. The NAS hierarchy key includes a NAS confidentiality protection key and a NAS integrity security protection key that are respectively used for confidentiality security protection and integrity security protection for a NAS message.
10. The SMF 139 is a control plane network function provided by the operator network, and is responsible for managing a PDU session of the terminal device 110. The PDU session is a channel for transmitting a PDU, and the terminal device and the data network DN 140 need to transmit PDUs to each other through the PDU session. The SMF 139 is responsible for establishment, maintenance, deletion, and the like of the PDU session. The SMF 139 includes session-related functions such as session management (for example, session establishment, modification, and release, including tunnel maintenance between the user plane function UPF 130 and the (R)AN 120), selection and control of the UPF 130, service and session continuity (service and session continuity, SSC) mode selection, and roaming.
11. The AF 141 is a control plane network function provided by the operator network, is configured to provide application layer information, and may interact with a policy framework by using the network exposure function network element or directly interact with a policy framework, to make a policy decision request or the like. The AF may be located inside or outside the operator network.

It may be understood that the foregoing network elements or functions may be physical entities in a hardware device, software instances running on dedicated hardware, or virtualization functions instantiated on a sharing platform (for example, a cloud platform). In short, an NF may be implemented by hardware or software.

In FIG. 1, Nnef, Nnrf, Npcf, Nudm, Nudr, Nnwdaf, Nausf, Namf, Nsmf, N1, N2, N3, N4, and N6 are interface sequence numbers. For example, for meanings of the interface serial numbers, refer to meanings defined in the 3GPP standard protocol. The meanings of the interface serial numbers are not limited in this application. It should be noted that names of interfaces between the network functions in the figure are merely examples. During specific implementation, the interface names of the system architecture may alternatively be other names. This is not limited in this application. In addition, names of messages (or signaling) transmitted between the foregoing network elements are merely examples, and do not constitute any limitation on functions of the messages.

For ease of description, in embodiments of this application, a network function (like the NEF 131, ..., and the SMF 139) is collectively/briefly referred to as an NF. In other words, the NF described below in embodiments of this application may be replaced with any network function. In addition, FIG. 1 describes only some network functions as an example, and the NF described below is not limited to the network functions shown in FIG. 1.

It should be understood that the foregoing network architecture applied to embodiments of this application is merely a network architecture described from a perspective of a service-based architecture, and a network architecture applicable to embodiments of this application is not limited thereto. Any network architecture that can implement the functions of the foregoing network elements is applicable to embodiments of this application.

It should be further understood that the AMF, the SMF, the UPF, the NEF, the AUSF, the NRF, the PCF, and the UDM shown in the figure may be understood as network elements configured to implement different functions in the core network, for example, may be combined as required to form a network slice. These network elements of the core network may be independent devices, or may be integrated into a same device to implement different functions. A specific form of the foregoing network elements is not limited in this application.

It should be further understood that the foregoing names are defined merely for distinguishing between different functions, and should not constitute any limitation on this application. This application does not exclude a possibility that another name is used in the 5G network and another future network. For example, in a 6G network, a part or all of the foregoing network elements may still use terms in 5G, or may use other names.

For ease of understanding embodiments of this application, some basic concepts in this application are briefly described.

### 1. Key architecture

In a 5G system (5G system, 5GS), a 5G authentication and key agreement (5G authentication and key agreement, 5G AKA) protocol is used as an example. A key architecture generated by using a key hierarchy is shown in FIG. 2. Keys related to identity authentication may include K, a CK (cipher Key), and an IK (integrity Key). The key hierarchy sequentially includes the following keys: an AUSF key (*K_{AUSF}*), an anchor key (*K_{SEAF}*), an AMF key (K*_{AMF}*), NAS signaling keys (*K_{NASint}* and *K_{NASenc}*), a non-3GPP access key (*K_{N3IWF}*), an NG-RAN key (*K_{gNB}*), keys (*K_{UPint}* and *K_{UPenc}*) for user plane (user plane) transmission, and RRC signaling keys (*K_{RRCint}* and *K_{RRCenc}*).

Specifically, in the 5GS, a security-type network element (or a network element having a root key) includes a UDM, an AMF, an AUSF, an authentication credential repository and processing function (authentication credential repository and processing function, ARPF) network element, and a security anchor function (security anchor function, SEAF) network element. The ARPF is mainly configured to store a root key of a user and authentication-related subscription data, calculate a 5G authentication vector, and the like. The SEAF is mainly configured to derive a lower-layer NAS key and a lower-layer AS key based on the anchor key, and compare authentication results.

The following describes the foregoing keys.
(1) *K_{AUSF}*: For the *K_{AUSF}* in a home network, the *K_{AUSF}* is derived from the CK and the IK by mobile equipment (mobile equipment, ME) and the ARPF. The *K_{AUSF}* is received from the ARPF as a part of a 5G home environment authentication vector (home environment authentication vector, HEAV).
(2) *K_{SEAF}*: This is an anchor key derived from the *K_{AUSF}* by the ME and the AUSF. The *K_{AUSF}* is provided by the AUSF for the SEAF in the serving network.
(3) *K_{AMF}*: In the serving network, *K_{AMF}* is a key derived from the *K_{SEAF}* by the ME and the SEAF. The ME and a source (source) AMF further derive the *K_{AMF}* during horizontal key derivation.
(4) NAS signaling keys: The *K_{NASint}* is a key derived from the *K_{AMF}* by the ME and the AMF. This key is used to protect NAS signaling by using a specific integrity algorithm. The *K_{NASenc}* is a key derived from the *K_{AMF}* by the ME and the AMF, and is used to protect NAS signaling by using a specific encryption algorithm.
(5) *K*_{*N*3*IWF*}: The *K*_{*N*3*IWF*} is a key derived from the *K_{AMF}* by the ME and the AMF for non-3GPP access. The *K*_{*N*3*IWF*} is not forwarded between N3IWFs.
(6) *K_{gNB}*: The *K_{gNB}* is a key derived from the *K_{AMF}* by the ME and the AMF. The ME and a source gNB further derive the *K_{gNB}* during horizontal or vertical key derivation.
(7) Keys for user plane UP transmission: The *K_{UPint}* is a key derived from the *K_{gNB}* by the ME and the gNB. The key is used to protect user plane data between the ME and the gNB by using a specific integrity algorithm. The *K_{UPenc}* is a key derived from the *K_{gNB}* by the ME and the gNB, and is used to protect data transmitted on a user plane by using a specific encryption algorithm.
(8) NAS signaling keys: The *K_{RRCint}* is a key derived from the *K_{gNB}* by the ME and the gNB. This key is used to protect RRC signaling by using a specific integrity algorithm. The *K_{RRCenc}* is a key derived from the *K_{gNB}* by the ME and the gNB. The key is used to protect RRC signaling by using a specific encryption algorithm.

It should be understood that, when a new key is derived based on a key, a key derivation function (key derivation function, KDF) may be used for derivation. The key derivation function derives one or more keys from a primary key by using a pseudo-random function. The key derivation function can be used to extend a key to a longer key or obtain a key in a required format.

For example, the CK and the IK may be derived based on a random challenge (random challenge, RAND), an authentication token (authentication token, AUTH), and K. A network side sends the RAND and the AUTH to the UE in a plaintext form. In other words, except K, other inputs for calculating the CK and the IK are sent in plaintext.

In addition, two algorithms may be used at a bottom layer of f1 to f5 algorithms: a MILENAGE algorithm and a Tuak algorithm.

The Tuak algorithm supports 128 bits and 256 bits, that is, the input key K may be 128 bits or 256 bits, and the output CK and IK may be 128 bits or 256 bits. Currently, the MILENAGE algorithm supports 128 bits, that is, the input key K is 128 bits, and the output CK and IK are 128 bits, and in R19, the MILENAGE algorithm may be upgraded to support 256 bits, that is, the input K may be 256 bits, and the output CK and IK may also be 256 bits.

According to a security principle, because keys used for communication between the UE and the network side are derived from a long-term key, and no other unknown random factor is introduced in the entire derivation process, when the long-term key of the UE is 128 bits, a maximum overall security strength that can be provided by the UE is a 128-bit security strength, and a 256-bit security strength cannot be provided. After a corresponding key is derived in the foregoing key derivation manner, the corresponding key may be used to protect corresponding NAS, RRC, and user plane (UP) data.

### 2. NAS security context

For example, the NAS security context may be classified into a full (full) NAS security context and a partial (partial) NAS security context from a perspective of integrity.

The partial NAS security context includes: a K_{AMF} and an associated key identifier (ngKSI), a UE security capability (UE security capability), an uplink NAS count value, and a downlink NAS count value. Compared with the partial NAS security context, the full NAS security context further includes an integrity security protection key and a confidentiality security protection (or referred to as encryption security protection) key, and a selected integrity security protection algorithm and a selected confidentiality security protection algorithm.

For example, the NAS security context may be classified into a native (Native) NAS security context and a mapped (Mapped) NAS security context from a perspective of a source.

A K_{AMF} in the native NAS security context is generated by performing a primary authentication process, and is identified by a native ngKSI. A K_{AMF} in the mapped NAS security context is generated by another key in an interaction process from different generations of networks (for example, generated by a 4G key in an interaction process from 4G to 5G), and is identified by a mapped ngKSI.

For example, the NAS security context may be classified into a current (current) NAS security context and a non-current (non-current) NAS security context from a perspective of a status. The current NAS security context is a security context that is recently activated, and the non-current NAS security context is a security context that is not in use.

It can be learned from the foregoing that a specific type of the NAS security context may include a mapped, fully native, or partially native security context. The statue may be current or non-current. For example, after completing primary authentication, UE and a core network generate a partially native context whose status is non-current. An AMF initiates a NAS security mode control (security mode control, SMC) procedure to the UE. After the NAS SMC succeeds, a fully native NAS context whose status is current is generated.

### 3. Security algorithm selection procedure

In the following procedure, the network side or a UE side selects a security algorithm for confidentiality security protection and/or integrity security protection.

### 1) Initial NAS security context setup

For example, each AMF may be provided, through a network management configuration, with an algorithm priority list allowed to be used. The algorithm priority list may include an algorithm for NAS integrity security protection (denoted as a NAS integrity protection algorithm) and an algorithm for NAS confidentiality security protection (NAS encryption algorithm). The algorithms in the list can be sorted based on priorities determined by an operator.

To setup a NAS security context, the AMF may select a NAS encryption algorithm and a NAS integrity protection algorithm. Then, the AMF may start the NAS security mode command (security mode command, SMC) procedure and carry the selected algorithms and a UE security capability in a message sent to the UE. For example, the AMF may select, based on an ordered list, a NAS encryption algorithm and a NAS integrity protection algorithm that have a high priority and that also exist in the UE security capability.

Optionally, during N2-based handover or mobility registration update, the AMF that serves the UE may change, and therefore security algorithms used for NAS security setup may change. In this case, a target AMF indicates (for example, using a NAS container) security algorithms selected in the N2-based handover and mobility registration update (using NAS SMC) to the UE.

### 2) Initial AS security context setup

For example, each RAN node may be provided, through a network management configuration, with an algorithm priority list allowed to be used. The algorithm priority list may include an algorithm for AS integrity security protection (denoted as an AS integrity protection algorithm) and an algorithm for AS confidentiality security protection (AS encryption algorithm). When an AS security context is setup in the RAN node, the AMF may send the UE security capability to the RAN node. The RAN node selects, from the list configured in the RAN node, an AS encryption algorithm and an AS integrity protection algorithm that have a highest priority and that also exist in the UE security capability. The algorithms selected by the RAN node may be indicated to the UE in an AS SMC procedure. The AS encryption algorithm selected by the RAN node may be used for encryption of a user plane and RRC signaling (when activated), and the selected AS integrity protection algorithm may be used for integrity protection for the user plane and RRC signaling (when activated).

### 3) Xn-based handover

When Xn-based handover occurs between a source RAN node (gNB/ng-eNB) and a target RAN node (gNB/ng-eNB), the source RAN node may send (for example, send by using a handover request message) an encryption protection algorithm and an integrity protection algorithm that are used by a source cell and a UE security capability to the target RAN node. The target RAN node may also select algorithms with a high priority from the received UE security capability based on a locally configured algorithm priority list. If the algorithms selected by the target RAN node are different from the algorithms selected by the source RAN node, the target RAN node may indicate, to the UE in a handover command message, the algorithms selected by the target RAN node. If the UE does not receive the indication of the integrity algorithm and the encryption algorithm, the UE continues to use the same algorithms as those used before the handover.

When Xn-based handover occurs between the ng-eNB and the gNB, the UE is notified of the algorithms selected by the target RAN node in the handover command. For example, in a path-switch (path-switch) message, the target RAN node may send, to the AMF, the UE security capability received from the source RAN node; and the AMF verifies whether the UE security capability received from the target RAN node matches the UE security capability locally stored in the AMF. If the UE security capability received from the target RAN node does not match the UE security capability locally stored in the AMF, the AMF may send, in a path-switch acknowledgment message, the UE security capability locally stored in the AMF to the target RAN node. If the target RAN node receives the UE security capability from the AMF in the path-switch acknowledgment message, the target RAN node may update an AS security context of the UE by using the UE security capability. The target RAN node may select algorithms with a highest priority from the algorithm priority list based on the locally configured algorithm priority list and the UE security capability. If the algorithms selected by the target RAN node are different from the algorithms used by the source RAN node, the target RAN node initiates an intra-cell handover procedure, and indicates the selected algorithms in the cell handover procedure.

### 4) N2-based handover

When N2-based handover occurs between the source RAN node and the target RAN node, the target AMF may send the UE security capability to the target RAN node in an NGAP handover request message. The target RAN node may select algorithms with a high priority from the UE security capability based on the locally configured algorithm priority list. If the algorithms selected by the target RAN node are different from the algorithms used by the source RAN node, the target RAN node may indicate, to the UE in a handover command message, the algorithms selected by the target RAN node. If the UE does not receive any selection of the integrity algorithm and the encryption algorithm, the UE continues to use the same algorithms as those used before the handover.

For N2-based handover, the source RAN node may send AS algorithms used in the source cell to the target RAN node. The AS algorithms used by the source cell are provided to the target RAN node, so that the target RAN node can use the algorithms in a potential RRC connection setup process.

### 5) Transition from an RRC_INACTIVE state to an RRC_CONNECTED state

During transition from the RRC_INACTIVE state to the RRC_CONNECTED state, the source RAN node may send, in an Xn-AP Retrieve UE Context Response message, the encryption protection algorithm and the integrity protection algorithm that are used by the source cell and the UE security capability to the target RAN node. The target RAN node may check whether the received encryption algorithm and the received integrity algorithm are supported. For example, the target RAN node should check the received algorithms in the locally configured algorithm priority list. If the same security algorithms are selected by the target RAN node, the target RAN node shall derive an RRC integrity key and an RRC encryption key based on the selected algorithms to protect an RRCResume message and send the RRCResume message to the UE on an SRB1.

If the target RAN node does not support the received algorithms, or if the target RAN node prefers to use different algorithms, the target RAN node sends an RRC setup (RRCSetup) message on an SRB0 to continue RRC connection setup. Then, the UE performs NAS-based RRC resume and negotiates appropriate algorithms with the target RAN node through the AS SMC procedure.

### 4. Security activation process

### 1) NAS security mode command (security mode command, SMC) procedure

For example, the NAS SMC procedure mainly has the following functions:
(1) After the primary authentication is completed, the AMF sends a NAS SMC message to convert a partial native context into a full native context for subsequent use.
(2) Change a NAS security algorithm in a current NAS security context. For example, in a scenario in which an AMF changes (for example, an AMF change scenario like N2-based handover or mobility registration), the NAS security algorithm in the current NAS security context needs to be changed.
(3) Change an uplink NAS count (count) value in a latest NAS security mode command (security mode complete, SMP) message to update a K_{gNB}.
(4) Send a selected EPS NAS security algorithm to the UE.

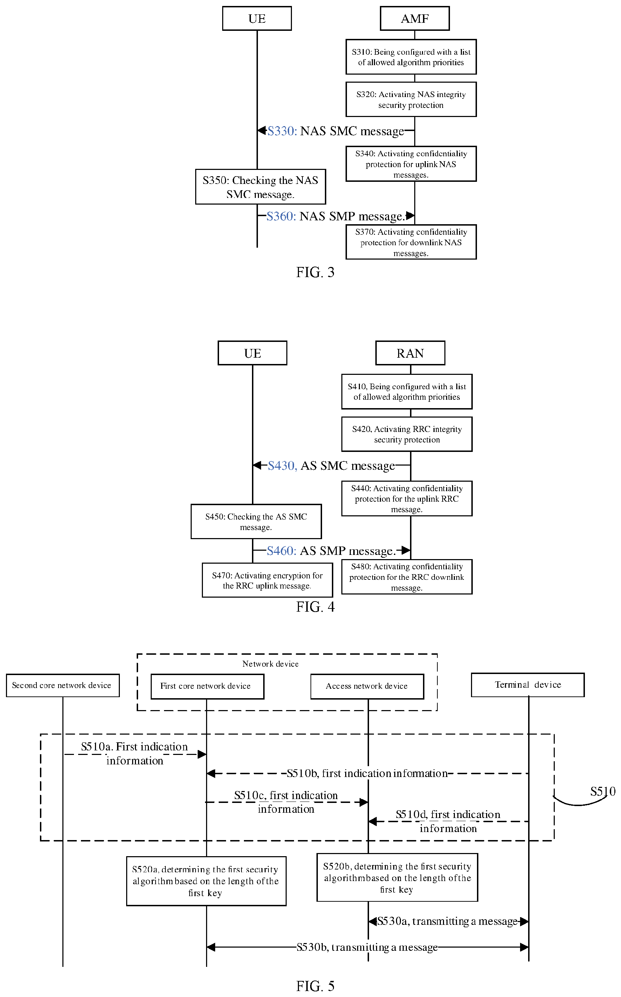

For ease of understanding, the NAS SMC procedure is described in detail with reference to FIG. 3.

FIG. 3 is a schematic flowchart of a NAS SMC procedure, including the following steps.

S310. An AMF is configured with an algorithm priority list allowed to be used.

For example, the AMF is configured with a NAS integrity security protection algorithm priority list (for example, NAS integrity security protection algorithms configured on the AMF include an AES128 integrity security protection algorithm, an SNOW128 integrity security protection algorithm, a ZUC128 integrity security protection algorithm, a null integrity security protection algorithm, and the like), and a NAS confidentiality security protection algorithm priority list (for example, NAS confidentiality security protection algorithms configured on the AMF include a ZU128C confidentiality security protection algorithm, an AES128 confidentiality security protection algorithm, an SNOW128 confidentiality security protection algorithm, a null integrity security protection algorithm, and the like).

The plurality of configured integrity security protection algorithms are sorted in descending order of priorities, which may be, for example, the AES128 integrity security protection algorithm, the SNOW128 integrity security protection algorithm, the ZUC128 integrity security protection algorithm, and the null integrity security protection algorithm. The plurality of configured confidentiality security protection algorithms are sorted in descending order of priorities, which are the ZUC128 confidentiality security protection algorithm, the AES128 confidentiality security protection algorithm, the SNOW128 confidentiality security protection algorithm, and the null integrity security protection algorithm respectively.

The AMF obtains a UE security capability and selects a NAS integrity security protection algorithm and a NAS confidentiality security protection algorithm based on the UE security capability and the algorithm priority list.

The UE security capability includes integrity security protection algorithms and confidentiality security protection algorithms that are supported by UE. The AMF selects, from the algorithm priority list of the AMF, algorithms that are supported in the UE security capability and have a highest priority. For example, if supported NAS integrity security protection algorithms included in the UE security capability are the AES128 integrity security protection algorithm and the SNOW128 integrity security protection algorithm, an integrity security protection algorithm selected by the AMF is the AES128 integrity security protection algorithm. For another example, if supported NAS confidentiality security protection algorithms included in the UE security capability are the AES128 confidentiality security protection algorithm and the ZUC128 confidentiality security protection algorithm, a confidentiality security protection algorithm selected by the AMF is the ZUC128 confidentiality security protection algorithm.

S320. The AMF activates NAS integrity security protection.

Before sending a NAS SMC message, the AMF activates NAS integrity security protection.

For example, the AMF calculates an integrity security protection key K_{NASint}. Further, the AMF performs integrity security protection calculation on the NAS SMC message, and obtains NAS MAC. For example, an input key for calculating the NAS MAC is the K_{NASint}, input parameters are a bearer identifier, a direction parameter, a count value, and an information element in the to-be-protected NAS SMC message, and a used security protection algorithm is the selected integrity security protection algorithm.

The bearer identifier is used to distinguish between different bearers. For example, in a 3GPP connection, the bearer identifier may be "0x01", and in a non-3GPP connection, the bearer identifier may be "0x02". The direction parameter is used to distinguish between an uplink message and a downlink message. For example, in an uplink message, a value of the direction parameter is 0, and in a downlink message, the value of the direction parameter is 1. The count value is used as a freshness parameter to prevent a replay attack. The information element in the to-be-protected NAS SMC message may be a selected EPS security protection algorithm, an international mobile station equipment identity and software version number (international mobile station equipment identity and software version number, IMEISV) request indication, and the like.

It should be noted that, in the NAS SMC message, only integrity security protection is performed, and confidentiality security protection is not performed. This is because the UE side needs to use a parameter (such as ngKSI) in the message to obtain a key and an algorithm for integrity check.

S330. The AMF sends the NAS SMC message to the UE.

The NAS SMC message includes but is not limited to the selected confidentiality security protection algorithm, the selected integrity security protection algorithm, the ngKSI, a replayed UE security capability, a K_{AMF} change indication, and the like. The selected confidentiality algorithm and the selected integrity security protection algorithm are a part of a NAS security context, and are used by the UE and the AMF side to negotiate a security protection algorithm for subsequent security protection. The ngKSI is used to identify a K_{AMF}. The replayed UE security capability is used to check whether the security capability is tampered with, that is, to prevent a degrade attack. The K_{AMF} change indication indicates the UE to calculate a new K_{AMF}.

The NAS SMC message includes a "security header type" information element, and the information element indicates a protection manner of the NAS message. When the NAS message is the NAS SMC message, a value of the information element is 0011, and indicates that integrity security protection is performed by using a 5G NAS security context.

It should be noted that the confidentiality security protection algorithm and the integrity security protection algorithm that are carried in the NAS SMC message are subsequently used as a part of the security context.

S340: The AMF activates confidentiality protection for the uplink NAS message.

After sending the NAS SMC message, the AMF activates confidentiality protection (for example, decryption) for the uplink NAS message.

S350: The UE checks the NAS SMC message.

For example, the UE obtains a corresponding K_{NASint} based on the ngKSI, and performs integrity check based on an integrity security protection algorithm carried in the message. If the integrity check is successful, the UE activates integrity security protection and confidentiality security protection for an uplink NAS message and a decryption operation of a downlink message.

S360: The UE sends a NAS SMP message to the AMF.

When the check in step S350 succeeds, the UE sends a NAS SMP message to the AMF, where integrity security protection and confidentiality security protection are performed on the message. For example, the integrity security protection key is KNASint, the integrity security protection algorithm is the selected integrity security protection algorithm carried in step S330, the confidentiality security protection key is KNASenc, and the confidentiality security protection algorithm is the selected confidentiality security protection algorithm carried in step S330. NAS MAC is used to perform integrity security protection. The AMF receives the NAS SMP message, and performs decryption and integrity check on the message.

When the NAS message is the NAS SMP message, a value of the information element is 0100, and indicates that confidentiality and integrity security protection are performed by using a 5G NAS security context.

S370: The AMF activates confidentiality protection for the downlink NAS message.

After receiving the NAS SMP message, the AMF activates confidentiality protection (for example, encryption) of the downlink NAS message.

It should be noted that, in an existing security mechanism, confidentiality security protection and integrity security protection are independent of each other, that is, keys and algorithms are isolated.

### 2) AS SMC process:

For example, functions of the AS SMC procedure are mainly to perform radio resource control (radio resource control, RRC) and user plane (user plane, UP) algorithm negotiation and RRC security activation. An RRC reconfiguration message is mainly used for UP security activation.

For ease of understanding, the AS SMC procedure is described in detail with reference to FIG. 4.

FIG. 4 is a schematic flowchart of a AS SMC procedure, including the following steps.

S410: An access network device is configured with an algorithm priority list allowed to be used.

For example, an AS integrity security protection algorithm priority list (for example, AS integrity security protection algorithms configured on the access network device include an AES integrity security protection algorithm, an SNOW integrity security protection algorithm, a ZUC integrity security protection algorithm, and a null integrity security protection algorithm, where the plurality of configured integrity protection algorithms are respectively the AES integrity security protection algorithm, the SNOW integrity security protection algorithm, the ZUC integrity security protection algorithm, and the null integrity security protection algorithm in descending order of priorities) and an AS confidentiality security protection algorithm priority list (for example, AS confidentiality security protection algorithms configured on the access network device include a ZUC confidentiality security protection algorithm, an AES confidentiality security protection algorithm, an SNOW confidentiality security protection algorithm, and a null integrity security protection algorithm, where the plurality of configured confidentiality security protection algorithms are respectively the ZUC confidentiality security protection algorithm, the AES confidentiality security protection algorithm, the SNOW confidentiality security protection algorithm, and the null integrity protection algorithm in descending order of priorities) are configured on the access network device.

The access network device receives a UE security capability, and selects an AS integrity security protection algorithm and an AS confidentiality security protection algorithm based on the UE security capability and the algorithm priority list.

For example, if the UE security capability includes that supported AS integrity security protection algorithm are the AES integrity security protection algorithm and the SNOW integrity security protection algorithm, the integrity security protection algorithm selected by the access network device is the AES integrity security protection algorithm. For another example, if the UE security capability includes that supported AS confidentiality security protection algorithms are the AES confidentiality security protection algorithm and the ZUC confidentiality security protection algorithm, the confidentiality security protection algorithm selected by the access network device is the ZUC confidentiality security protection algorithm.

S420: Activate RRC integrity security protection.

Before sending an AS SMC message, the access network device activates RRC integrity security protection.

For example, the access network device performs integrity security protection calculation on the AS SMC message, and obtains MAC-I. For example, an input key for calculating AS MAC is Krrcint, input parameters are a bearer identifier, a direction parameter, and a value of a counter, and a used security protection algorithm is the selected integrity security protection algorithm.

The bearer identifier is used to distinguish between different bearers. For example, in a 3GPP connection, the bearer identifier may be "0x01", and in a non-3GPP connection, the bearer identifier may be "0x02". The direction parameter is used to distinguish between an uplink message and a downlink message. For example, in the uplink message, a value of the direction parameter is 0, and in the downlink message, a value of the direction parameter is 1. The value of the counter is used as a freshness parameter to prevent a replay attack.

It should be noted that, in the AS SMC message, only integrity security protection is performed, and confidentiality security protection is not performed. This is because the UE side needs to use a parameter (such as ngKSI) in the message to obtain a key and an algorithm for integrity check.

S430: The access network device sends the AS SMC message to the UE.

The AS SMC message includes but is not limited to the selected confidentiality security protection algorithm and the selected integrity security protection algorithm. The selected confidentiality security protection algorithm and the selected integrity security protection algorithm are a part of an AS security context, and are used by the UE and the access network device side to negotiate a security protection algorithm for subsequent security protection.

It should be noted that security protection algorithms of an RRC message and a UP message may be unified, that is, the selected confidentiality security protection algorithm and the selected integrity security protection algorithm are applicable to both security protection for the RRC message and security protection for the UP message; or security protection algorithms of an RRC message and a UP message may be independent, that is, the message includes a confidentiality security protection algorithm selected for the RRC, an integrity security protection algorithm selected for the RRC, a confidentiality security protection algorithm selected for the UP, and an integrity security protection algorithm selected for the UP.

S440: The access network device activates confidentiality protection for the uplink RRC message.

After sending the AS SMC message, the access network device activates confidentiality protection (for example, decryption) of the uplink RRC message.

S450: The UE checks the AS SMC message.

For example, the UE obtains the corresponding KRRCint, and performs integrity check based on the integrity security protection algorithm carried in the message. If the integrity check is successful, the UE activates integrity security protection and confidentiality security protection for an uplink RRC message and a decryption operation of a downlink message.

S460: The UE sends an AS SMP message to the access network device.

When the check in step S450 succeeds, the UE sends an AS SMP message to the access network device. Integrity security protection and confidentiality security protection are performed on the message. For example, an integrity security protection key is KRRCint, an integrity security protection algorithm is the selected integrity security protection algorithm carried in the AS SMC message in step S430, a confidentiality security protection key is KRRCenc, and a confidentiality security protection algorithm is the selected confidentiality security protection algorithm carried in the AS SMC message in step S430.

S470: The UE activates confidentiality for the uplink RRC message.

After sending the AS SMP message, the UE activates confidentiality protection for the uplink RRC message.

S480: The access network device activates confidentiality protection for the downlink RRC message.

After receiving the AS SMP message, the access network device activates confidentiality (for example, encryption) of the downlink RRC message.

It should be noted that, in an existing security mechanism, confidentiality security protection and integrity security protection are independent of each other, that is, keys and algorithms are isolated.

In general, the security algorithm of the 5G mobile communications network is selected by the network side (AMF/RAN) through negotiation based on the UE security capability reported by the UE and the network side capability (for example, a configured security protection algorithm), and a higher-priority security algorithm supported by both the network side and the UE side is selected. For example, for the UE side, if the UE supports a 256-bit security algorithm, or the UE security capability includes a 256-bit security algorithm, and the network side also supports a 256-bit security algorithm, the security algorithm negotiated by the network side and the UE side may be 256 bits. However, in this case, if the long-term key bits in the subscriber identity module (e.g., a universal subscriber identity module (USIM) card) of the UE are 128 bits (e.g., in the case that the user changes the ME but does not change the USIM card), the key generated based on the long-term key and the negotiated security algorithm can only support 128-bit security. In this case, if the 256-bit security algorithm is used, a waste of computing resources may be caused.

In view of this, this application provides a communication method. According to the method, a network side and UE can negotiate to determine a proper security algorithm, thereby reducing computing resource overheads.

For ease of understanding of embodiments of this application, the following several points are described.

First, in this application, "being used to indicate" may include "being used to directly indicate" and "being used to indirectly indicate". When a piece of indication information is described as being used to indicate A, the indication information may be used to directly indicate A or used to indirectly indicate A, but it does not necessarily mean that the indication information includes A.

Information indicated by the indication information is referred to as to-be-indicated information. In a specific implementation process, there are a plurality of manners of indicating the to-be-indicated information, The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device.

Second, "at least one" shown in this application means one or more, and "a plurality of" means two or more. In addition, in embodiments of this application, "first", "second", and various numeric numbers (for example, "#1" and "#2") are merely used for differentiation for ease of description, and are not used to limit the scope of embodiments of this application. The sequence numbers in the following processes do not mean execution sequences. The execution sequences of the processes should be determined based on functions and internal logic of the processes, and should not be construed as any limitation on implementation processes of embodiments of this application. It should be understood that, objects described in this way may be interchangeable in proper cases, so that solutions other than embodiments of this application can be described. In addition, in embodiments of this application, words such as "510" and "520" are merely identifiers for ease of description, and do not limit a sequence of performing steps.

Third, in this application, a term like "example" or "for example" represents giving an example, an illustration, or a description. Any embodiment or design scheme described as an "example" or "for example" in this application should not be explained as being more preferred or having more advantages than another embodiment or design scheme. Exactly, use of the word "example" or "for example" is intended to present a related concept in a specific manner.

Fourth, "save" in embodiments of this application may mean that saved in one or more storages. The one or more storages may be separately disposed, or may be integrated into an encoder or a decoder, a processor, or a communication apparatus. Alternatively, a part of the one or more memories may be separately disposed, and a part of the one or more memories are integrated into the translator, the processor, or the communication apparatus. A type of the memory may be a storage medium in any form. This is not limited in this application.

Fifth, a "protocol" in embodiments of this application may be a standard protocol in the communication field, for example, may include an LTE protocol, an NR protocol, and a related protocol applied to a future communication system. This is not limited in this application.

Sixth, in embodiments of this application, "in a case of", "when", and "if" may be used interchangeably sometimes. It should be noted that, when a difference between the three is not emphasized, meanings to be expressed are consistent.

Seventh, in embodiments of this application, terms and English acronyms and abbreviations, such as radio resource control (RRC), are all examples provided for ease of description, and should not constitute any limitation on this application. This application does not exclude a possibility of defining, in an existing or future protocol, another term that can implement a same or similar function.

Eighth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

It should be further understood that a specific structure of an execution body of the method provided in embodiments of this application is not specifically limited in the following embodiments, provided that communication can be performed according to the method provided in embodiments of this application by running a program that records code of the method provided in embodiments of this application. For example, the execution body of the method provided in embodiments of this application may be a first device, or may be a functional module that can invoke a program and execute the program in the first device.

FIG. 5 is a schematic flowchart of a communication method 500 according to this application. The method may include the following several steps.

302: The network device receives the first indication information.

The first indication information indicates a length of a first key, and the first key is a key of the terminal device. For example, the first key is a long-term key of the terminal device.

Specifically, the first key may be a long-term key stored in a subscriber identity module of the terminal device. A length of the long-term key is, for example, 128 bits or 256 bits.

In a possible implementation, the network device is a first core network device, and the first core network device may be an AMF. The first core network device may receive the first indication information in the manner shown in S510a or S510b.

S510a. The second core network device sends the first indication information to the first core network device. Correspondingly, the first core network device receives the first indication information from the second core network device.

For example, the second core network device is a UDM. The second core network device receives identification information of a terminal device from the first core network device. For example, the identification information of the terminal device is a hidden subscriber subscription identifier (subscription concealed identifier, SUCI). The second core network device decrypts the identification information of the terminal device to obtain a subscriber permanent identifier (subscriber permanent identifier, SUPI) of a subscriber of the terminal device, and retrieves a long-term key of the terminal device from a stored key based on the SUPI of the terminal device, to obtain a length of the first key.

Specifically, the second core network device may send the first indication information to the first core network device in an authentication procedure of the terminal device. For example, the second core network device sends the first indication information to the third core network device by using the first message, so that the third core network device sends the first indication information to the first core network device. The third core network device may be, for example, an authentication server function network element.

For example, the second core network device may send the first indication information to the third core network device by using an Nudm_UEAuthentication_Get Response message, and the third core network device sends the first indication information to the first core network device by using an Nausf_UEAuthentication_Authenticate Response message.

Alternatively, the second core network device may send the first indication information to the first core network device after the terminal device is successfully authenticated. The first indication information may be carried in a newly defined message of an existing message. This is not limited.

For example, the first indication information may be a value of 1 bit. For example, when the value of the first indication information is 1, it indicates that the length of the first key is the first length, for example, 128 bits or 256 bits; or when the value of the first indication information is 0 or is not carried, it indicates that the length of the first key is the second length, for example, 256 bits or 128 bits.

Optionally, after the second core network device determines the length of the first key, the second core network device may further determine a length of a key derivation algorithm based on the length of the first key, and derive the second key based on the first key and the key derivation algorithm.

A length of an output key of the key derivation algorithm is equal to a length of the first key. The second key is used to determine a security key used in the first security algorithm. For example, the second key includes an integrity key (integrity key, IK) and a cipher key (cipher key, IK). For the first security algorithm, refer to the following description.

S510b. The terminal device sends the first indication information to the first core network device. Correspondingly, the first core network device receives the first indication information from the terminal device.

Optionally, before the terminal device sends the first indication information to the first core network device, the terminal device may obtain the length of the first key.

For example, the terminal device may obtain the length of the first key from the subscriber identity module. For example, the subscriber identity module has an interface that can invoke the length of the first key. The terminal device may receive the length of the first key by sending, to the subscriber identity module, a request message for requesting the length of the first key, and receiving a response message from the subscriber identity module.

Specifically, the terminal device may send the first indication information to the first core network device in an uplink NAS message. For example, the terminal device may add the first indication information to a registration request message sent to the second core network device.

In another possible implementation, the network device is an access network device. The access network device may receive the first indication information in the manner shown in S510c or S510d.

S510c. The first core network device sends the first indication information to the access network device. Correspondingly, the access network device receives the first information from the first core network device.

For example, after receiving the first indication information from the second core network device (S510a) or the terminal device (S510b), the first core network device sends the first indication information to the access network device.

302: The terminal device sends first indication information to the access network device. Correspondingly, the access network device receives the first indication information from the terminal device.

Optionally, before the terminal device sends the first indication information to the access network device, the terminal device may obtain the length of the first key. For example, the terminal device may obtain the length of the first key from the subscriber identity module. For details, refer to the descriptions in S510b.

S520. The network device determines a first security algorithm based on a length of the first key.

a length of a key used in the first security algorithm is less than or equal to a length of the first key.

Specifically, if the network device is the first core network device (S520a), the first core network device may determine the first security algorithm based on the length of the first key, the security capability information of the terminal device, and the algorithm priority list.

The security capability information of the terminal device indicates a security algorithm supported by the terminal device. For example, the security capability information may include a list of security algorithms supported by the terminal device, and the list of security algorithms may include at least one security algorithm supported by the terminal device. For the security capability information of the terminal device, refer to the UE security capability in S310. The algorithm priority list is used to configure priorities of security algorithms supported by the network side. For the algorithm priority list, refer to the description in S310.

The first security algorithm determined by the first core network device may be used to perform security protection on a NAS message transmitted between the terminal device and the first core network device. For example, the security algorithm is used to perform security protection on a security mode command message and a security mode complete message transmitted in a NAS SMC procedure, and a NAS message transmitted after the NAS SMC procedure.

The first security algorithm is one of the security algorithms supported by the terminal device, or the first security algorithm is one of the algorithms supported by the terminal device. a length of an input key of the first security algorithm is less than or equal to a length of the first key, a priority of the first security algorithm is higher than a priority of a second security algorithm in the algorithm priority list, and the second security algorithm includes a security algorithm, other than the first security algorithm, that is in the list of security algorithms supported by the terminal device and has an input key whose length is less than or equal to the first key length.

For example, a specific manner in which the first core network device determines the first security algorithm based on the length of the first key, the security capability information of the terminal device, and the algorithm priority list is as follows:
Manner 1: The first core network device traverses the algorithm priority list in descending order of priorities, and if the security capability information of the terminal device indicates that the terminal device supports a currently traversed security algorithm (denoted as a security algorithm #1), and a length of an input key of the security algorithm #1 is less than or equal to a length of the first key, determines the security algorithm #1 as the first security algorithm. Otherwise, the algorithm priority list continues to be traversed until a security algorithm that meets the foregoing conditions is found.
Manner 2: The first core network device determines, based on the security capability information of the terminal device and the algorithm priority list, a security algorithm (denoted as a security algorithm #3) supported by both the terminal device and the network device. The first core network device determines, from the security algorithm #3 based on the algorithm priority list, a security algorithm with a highest priority and whose input key length is less than or equal to the length of the first key as the first security algorithm.

For example, the security algorithm configured in the algorithm priority list includes an AES256 AEAD algorithm, an SNOW256 AEAD algorithm, a ZUC256 AEAD algorithm, an AES128 encryption algorithm, an SNOW128 integrity security protection algorithm, a ZUC128 integrity security protection algorithm, a null algorithm, and the like. The configured multiple encryption algorithms are sorted in descending order of priority, for example, may be an AES256 AEAD algorithm, an SNOW256 AEAD algorithm, a ZUC256 AEAD algorithm, an AES128 encryption algorithm, and a null algorithm. The configured integrity protection algorithms may be the SNOW128 integrity protection algorithm, the ZUC128 integrity security protection algorithm, and the NULL algorithm in descending order of priority.

Similarly, if the network device is an access network device, the access network device may determine the first security algorithm based on the length of the first key, the security capability information of the terminal device, and the algorithm priority list. The security capability information of the terminal device indicates a list of security algorithms supported by the terminal device, and the algorithm priority list is used to configure a priority of a security algorithm supported by a network side. For a specific determining manner, refer to a manner in which the first core network device determines the first security algorithm.

The first security algorithm determined by the access network device may be used to perform security protection on an AS message transmitted between the terminal device and the access network device. For example, the security algorithm is used to perform security protection on an RRC message (for example, a security mode command message or a security mode complete message) transmitted in an AS SMC procedure. For another example, the security algorithm is used to perform security protection on a user plane (user plan, UP) message transmitted after the AS SMC procedure.

Optionally, the method further includes: determining, by the network device, a length of a security key based on the length of the first key.

A length of the security key is the same as a length of an input key of the first security algorithm. the security key is a key used in the first security algorithm. That is, integrity security protection and confidentiality security protection (encryption) may be performed on a sent message based on the security key and the first security algorithm, or integrity check and decryption may be performed on a received message. The security key may be a key shared between the terminal device and the network device. For example, the security key is a key obtained after derivation and truncation processing are performed on a key generated in a master authentication process. For example, the security key determined by the first core network device may be KNASint and KNASenc. Alternatively, the security key determined by the access network device is KUPint and KUPenc.

Specifically, if the selected first security algorithm is 128 bits, it is determined that the length of the security key is 128 bits. For example, the first core network device truncates the security key generated based on KAMF to 128 bits. For a specific truncation manner, refer to existing related descriptions.

If the selected security algorithm is 256 bits, it is determined that the length of the security key is 256 bits. If the length of the security key generated by the first core network device based on the KAMF is 512 bits, the key 512 may be truncated to 256 bits.

Similarly, the access network device truncates the security key generated based on the KgNB to 128 bits, or truncates the security key to 256 bits.

When the network device receives the first indication information from the second core network device, the method further includes: sending, by the network device, second indication information to the terminal device, where the second indication information indicates the length of the first key.

Optionally, the method further includes: the length of the first key is used by the terminal device to determine a length of a key output by using a key derivation algorithm, and the key output by using the key derivation algorithm is used to generate the security key.

In an implementation, when the network device is the first core network device, the first core network device sends a non-access stratum security mode command message to the terminal device, where the non-access stratum security mode command message includes the second indication information.

In another implementation, when the network device is an access network device, the access network device sends an access stratum security mode command message to the terminal device, where the access stratum security mode command message carries the second indication information.

Optionally, the method further includes: determining, by the terminal device, a length of a security key based on the first security algorithm, where the length of the security key is the same as a length of a key used in the first security algorithm. For details, refer to the foregoing manner in which the first core network device determines the length of the security key. Details are not described again.

Optionally, before determining the first security algorithm, the network device determines that the trigger condition is met. It may be understood that the network device selects the security algorithm when the trigger condition is met. The trigger condition includes but is not limited to: after the primary authentication ends, determining, by the network device, to initiate a security mode command procedure; or a scenario in which the network device is handed over; or determining, by the network device, to change an uplink count value (for example, to flip a NAS counter or trigger primary authentication).

S530. The network device transmits a message to the terminal device.

For example, when the network device is the first core network device (S530a), the message may be a security mode command message or a security mode complete message transmitted in a NAS SMC procedure, or a NAS message transmitted after the NAS SMC procedure.

When the network device is an access network device (S530b), the message may be an RRC message (for example, a security mode command message or a security mode complete message) transmitted in an AS SMC procedure, or a user plane (user plan, UP) message transmitted after an AS SMC procedure.

The message is a message on which security protection is performed based on the first security algorithm.

It can be learned from the foregoing that the security algorithm determined by the network device in this embodiment may be an authenticated encryption algorithm that can implement both confidentiality security protection and integrity security protection; or may be a confidentiality security protection algorithm and an integrity security protection algorithm; or may be an authenticated encryption algorithm selected, and a confidentiality security protection algorithm and an integrity security protection algorithm that are selected.

Based on the foregoing solution, the network device determines the first security algorithm based on the length of the first key, so that a waste of computing resources caused by improper selection of a security algorithm can be avoided. For example, when a key length used in the security algorithm determined by the network device is greater than a length of the first key, a key generated based on the first key and the security algorithm can support only security of the first key length. In this case, performing security protection based on the security algorithm selected by the network device may cause a waste of computing resources.

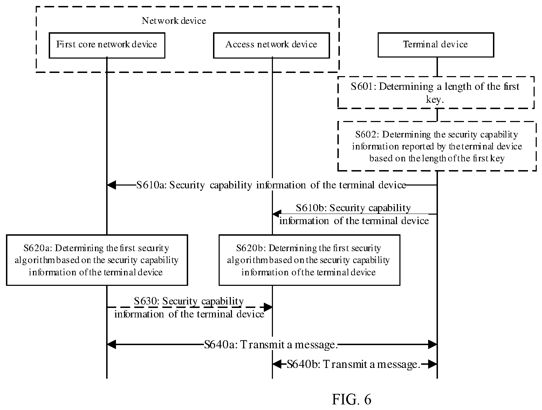

FIG. 6 is a schematic flowchart of a communication method 600 according to this application. The method may include the following several steps.

S610. A terminal device sends security capability information of the terminal device to a network device. Correspondingly, the network device receives the capability information sent by the terminal device.

The security capability information of the terminal device indicates a list of security algorithms supported by the terminal device, where the list of security algorithms includes at least one security algorithm supported by the terminal device. A length of an input key of a security algorithm supported by the terminal device is less than or equal to a length of the first key.

For example, the terminal device may send the security capability information to the network device in an uplink NAS message. For example, the terminal device may add the security capability information to a registration request message sent to the network device.

The network device may be a first core network device (S610a) or an access network device (S610b). Optionally, the terminal device may further send the security capability information to both the first core network device and the access network device. For example, the terminal device sends the security capability information to the first core network device by using the access network device.

Optionally, before S610, the method further includes S601 and S602.

S601. A terminal device determines a length of a first key.

For a specific process in which the terminal device determines the first key length, refer to the description in S510b.

S602. The terminal device determines, based on the length of the first key, security capability information reported by the terminal device.

For example, when the terminal device is configured with the terminal device security capability information (for the security capability information, refer to the existing description, for example, the UE security capability in S310), the terminal device selects, from the UE security capability based on the length of the first key, a security algorithm whose input key length is less than or equal to the first key for reporting.

S620. The network device determines a first security algorithm based on security capability information of the terminal device.

When the network device is the first core network device (S620a), the first security algorithm determined by the first core network device may be used to perform security protection on a message transmitted between the terminal device and the first core network device.

When the network device is an access network device (S620b), the first security algorithm determined by the access network device may be used to perform security protection on a message transmitted between the terminal device and the access network device.

For example, the network device determines the first security algorithm based on the algorithm priority list and the security capability information of the terminal device.

For example, the network device traverses the algorithm priority list in descending order of priorities. If the currently traversed security algorithm #1 exists in the security capability information of the terminal device, the network device determines the security algorithm #1 as the first security algorithm. A priority of the security algorithm #1 is higher than a priority of another security algorithm supported by the terminal device and included in the algorithm priority list.

Optionally, the method further includes the following step.

S630. The first core network device sends the security capability information of the terminal device to the access network device. Correspondingly, the access network device receives the security capability information of the terminal device from the first core network device.

That is, when the network device is an access network device, the access network device may further receive security capability information of the terminal device from the first core network device.

S640. The network device transmits a message to the terminal device.

For example, when the network device is the first core network device (S650a), the message may be a security mode command message and a security mode complete message that are transmitted in a NAS SMC procedure, and a NAS message transmitted after the NAS SMC procedure.

When the network device is an access network device (S650b), the message may be an RRC message (for example, a security mode command message or a security mode complete message) transmitted in an AS SMC procedure, or a user plane (user plan, UP) message transmitted after an AS SMC procedure.

The message is a message on which security protection is performed based on the first security algorithm.

Based on the foregoing solution, the network device determines the first security algorithm by using the security capability information of the terminal device that is reported by the terminal device. A length of an input key that is of the security algorithm supported by the terminal device and that is included in the security capability information is less than or equal to a length of the first key. This can avoid a waste of computing resources caused by improper selection of a security algorithm.

It should be understood that the foregoing procedure of determining the communication method is merely an example. This embodiment of this application may be further applied to another scenario in which a security algorithm needs to be determined. For example, in Xn handover and/or N2 handover, the source RAN node may send (for example, by using a handover request message) the first indication information and/or the UE security capability (referring to the security capability information of the terminal device in S610) to the target RAN node, so that the target RAN node selects a proper security algorithm based on the communication method shown in this embodiment of this application.

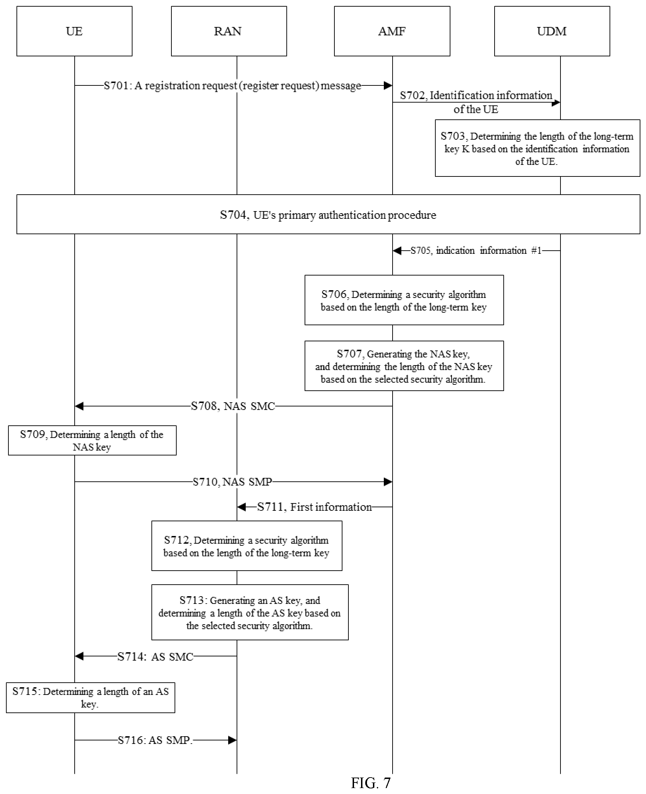

The following describes in detail the communication method provided in the embodiments of this application with reference to FIG. 7 to FIG. 9.

FIG. 7 is a schematic flowchart of a communication method according to this application. The method may include the following steps.

S701. UE sends a registration request (registration request) message to an AMF by using a RAN. Correspondingly, the AMF receives the registration request message from the UE.

The registration request message includes identification information of the UE on which confidentiality protection is performed, security capability (UE security capability) information of the UE, and other registration information.

The identification information of the UE on which confidentiality protection is performed is, for example, an SUCI or a 5G globally unique temporary UE identity (5G globally unique temporary UE identity, 5G-GUTI). The security capability information of the UE indicates a security algorithm supported by the UE.

S702. The AMF sends identification information of the UE to the UDM. Correspondingly, the UDM receives the identification information of the UE from the AMF.

S703. The UDM determines a length of a long-term key K (an example of the first key) based on the identification information of the UE.

For example, the UDM decrypts the identification information of the UE on which confidentiality protection is performed, to obtain the identification information of the UE, for example, obtain an SUPI of the UE; the UDM determines a long-term key K according to the SUPI of the UE, for example, the long-term key K is a long-term key stored in a USIM card of the UE; and the UDM obtains the long-term key K through retrieval according to the SUPI of the UE, and determines a length of the long-term key of the UE.

For example, the length of the long-term key is 128 bits or 256 bits.

S704. The network side and the UE perform a primary authentication procedure.

For example, the primary authentication procedure of the network side and the UE may complete identity authentication of the UE and the network side and derive keys at each layer.

For example, in the master authentication procedure, the UDM may calculate a CK and an IK based on the long-term key K and a key derivation algorithm (for example, a MILENAGE 128 algorithm or a MILENAGE 256 algorithm); the UDM calculates Kasuf based on the CK and the IK, and the AUSF calculates Kseaf based on Kausf; and the SEAF calculates KAMF. For a specific calculation process, reference may be made to existing related descriptions.

Optionally, when deriving the key, the UDM may select, based on a length of the long-term key K, a length of an input of a used key derivation algorithm.

For example, the UDM may select, based on the length of the long-term key, whether to use the MILENAGE-128 algorithm or the MILENAGE-256 algorithm to perform f1-f5 calculation, so as to derive a 128-bit or 256-bit IK and a CK, and derive a 256-bit (corresponding to the CK and the length of the IK is 128 bits) or 512-bit (corresponding to the CK and the length of the IK is 256 bits) KAUSF, KSEAF, KAMF, and the like.

Specifically, when the long-term key is 128 bits, the UDM may select a 128-bit key derivation algorithm, and obtain a 128-bit CK and an IK, so that each network element derives a 256-bit key, for example, a 256-bit KAUSF, KSEAF, or KAMF.

When the long-term key is 256 bits, the UDM may select a 256-bit key derivation algorithm, and obtain a 256-bit CK and an IK, so that each network element derives a 512-bit key, for example, a 512-bit KAUSF, KSEAF, or KAMF.

S705. The UDM sends indication information #1 to the AMF. Correspondingly, the AMF receives the indication information #1 from the gNB.

The indication information #1 (an example of the first indication information) indicates a length of the long-term key K.

For example, the indication information #1 may directly indicate the length of the long-term key; or the indication information #1 may be one bit, and the bit is set to "0" to indicate that the length of the long-term key is 128 bits; and the bit is set to "1" to indicate that the length of the long-term key is 256 bits. The reverse is also applicable.

For example, the UDM may send the indication information #1 to the AUSF by using an Nudm_UEAuthentication_Get Response message, and the AUSF sends the indication information #1 to the AMF by using an Nausf_UEAuthentication_Authenticate Response message.

Alternatively, the UDM sends the indication information #1 to the AMF after the UE is successfully authenticated. The indication information #1 may be carried in a newly defined message of an existing message. This is not limited.

S706. The AMF determines a security algorithm (an example of the first security algorithm) based on a length of the long-term key.

For the security algorithm, refer to the foregoing description. For example, the security algorithm is 128-EEA1.

Specifically, the AMF may determine the security algorithm based on the length of the long-term key, the security capability information of the UE, and the configured algorithm priority list. a length of the input key of the security algorithm is less than or equal to a length of the long-term key.

For example, if the length of the long-term key is 128 bits, a security algorithm with a higher priority is selected from 128-bit security algorithms supported by both the UE and the network side.

if the length of the long-term key is 256 bits, selecting a security algorithm with a higher priority from 256-bit security algorithms supported by both the UE and the network side.

If the length of the long-term key is 256 bits, if the UE and/or the network side do not support the 256-bit security algorithm, a security algorithm with a higher priority is selected from the 128-bit security algorithm supported by both the UE and the network side.

S707. The AMF generates a NAS key, and determines a length of the NAS key (an example of the security key) based on the selected security algorithm.

For example, the AMF generates the NAS key based on the KAMF. The NAS key is KNASint and KNASenc. A length of the NAS key is consistent with a length of an input key of the security algorithm.

It can be learned from S704 that a length of the KAMF may be 256 bits or 512 bits, so that the NAS key generated based on the KAMF is correspondingly 256 bits or 512 bits.

Specifically, if the length of the input key of the selected security algorithm is 128 bits, it is determined that the length of the NAS key is 128 bits. For example, the AMF truncates the NAS key generated based on KAMF to 128 bits. For a specific truncation manner, refer to existing related descriptions.

If the length of the input key of the selected security algorithm is 256 bits, it is determined that the length of the NAS key is 256 bits. If the length of the NAS key generated by the AMF based on KAMF is 512 bits, the 512-bit key may be truncated to 256 bits.

The method further includes: sending, by the AMF to the UE, indication information #2 (an example of the second indication information) indicating a length of the long-term key, and/or indication information #3 indicating the security algorithm.

In a possible implementation, the AMF sends the indication information #2 and/or the indication information #3 to the UE by using a NAS SMC procedure. For details, refer to S708 to S710.

In another possible implementation, the AMF sends the indication information #2 and/or the indication information #3 to the UE by using an AS SMC procedure of the access network device RAN. For details, refer to S711 to S716.

S708. The AMF sends the NAS SMC message to the UE. Correspondingly, the UE receives the NAS SMC from the AMF.

The NAS SMC may carry indication information #2, and the indication information #2 indicates a length of the long-term key.

Optionally, the NAS SMC carries indication information #3, and the indication information #3 indicates a security algorithm selected by the AMF.

S709. The UE determines a length of the NAS key.

In a possible implementation, the UE determines the length of the NAS key (an example of the security key) based on the length of the long-term key and the security algorithm.

For example, the UE may select a key derivation algorithm (for example, a MILENAGE-128 algorithm or a MILENAGE-256 algorithm) based on the length of the long-term key to obtain the CK and the IK. For example, if the length of the long-term key is 128 bits, the MILENAGE 128 algorithm is selected to derive the 128-bit CK and IK; if the length of the long-term key is 256 bits, the MILENAGE-256 algorithm is selected to derive the 256-bit CK and IK.

Further, the UE determines the NAS key based on the CK and the IK.

If the length of the CK and the length of the IK are 128 bits, the UE derives a NAS key whose length is 256 bits. If the length of the CK and the length of the IK are 256 bits, the UE derives a NAS key whose length is 512 bits.

If the UE derives a 256-bit or 512-bit NAS key and the input of the security algorithm is 128 bits, the UE truncates the derived NAS key to 128 bits.

When the UE derives the 256-bit NAS key, if the input of the security algorithm is 256 bits, the UE determines that the length of the NAS key is 256 bits.

When the UE derives the 512-bit NAS key, if the input of the security algorithm is 256 bits, the UE truncates the derived NAS key to 256 bits.

In another possible implementation, the UE may determine the length of the NAS key based on a length of an input key of the security algorithm.

For example, if the NAS SMC does not carry the indication information #2, the UE may determine the length of the NAS key based on the length of the input of the security algorithm.

This implementation is applicable to a scenario in which the UE and the network side derive a key based on a fixed key derivation algorithm. For example, the NAS key derived by the UE based on a fixed key derivation algorithm is 256 bits or 512 bits.

In this case, if the length of the input of the security algorithm is 128 bits, it is determined that the length of the NAS key is 128 bits; or if the length of the input of the security algorithm is 256 bits, it is determined that the length of the NAS key is 256 bits.

S710. The UE sends a NAS SMP to the AMF. Correspondingly, the AMF receives the NAS SMP from the UE.

S711. The AMF sends the first information to the RAN. Correspondingly, The RAN receives the first information from the AMF.

The first information may include security capability information of the UE and the indication information #2. Alternatively, the security capability information of the UE and the indication information #2 may be separately carried in different messages. This is not limited.

It should be understood that the AMF may send the first information to the RAN in a plurality of procedures. For details, refer to the foregoing security algorithm selection procedure.

S712. The RAN determines a security algorithm based on a length of the long-term key.

For a specific determining manner, refer to the description in S706. The length of the input of the security algorithm selected by the RAN may be 128 bits or 256 bits.

S713. The RAN generates an AS key (an example of a security key), and determines a length of the AS key based on the selected security algorithm.

A length of the AS key (for example, KRRCint and KRRCenc) is consistent with a length of the security algorithm.

Specifically, if the selected security algorithm is 128 bits, it is determined that the length of the AS key is 128 bits. For example, the RAN truncates the AS key generated based on the KgNB to 128 bits.

If the selected security algorithm is 256 bits, it is determined that the length of the AS key is 256 bits. If the length of the AS key generated by the AMF based on the KgNB is 512 bits, the 512-bit key may be truncated to 256 bits.

S714. The RAN sends the AS SMC to the UE. Correspondingly, the UE receives the AS SMC from the RAN.

The AS SMC may carry indication information #2, and the indication information #2 indicates a length of the long-term key.

Optionally, the AS SMC carries indication information indicating a security algorithm selected by the RAN.

S715. The UE determines a length of an AS key (an example of a security key).

For example, the AS key is KUPint and KUPenc.

For example, the UE determines the length of the AS key based on the length of the long-term key and a security algorithm.

Alternatively, the UE may determine the length of the AS key based on a length of an input of the security algorithm.

For a specific determining manner, refer to the description in S709. A length of the AS key may be 128 bits or 256 bits.

S716. The UE sends the AS SMP to the RAN. Correspondingly, the RAN receives the AS SMP from the UE.

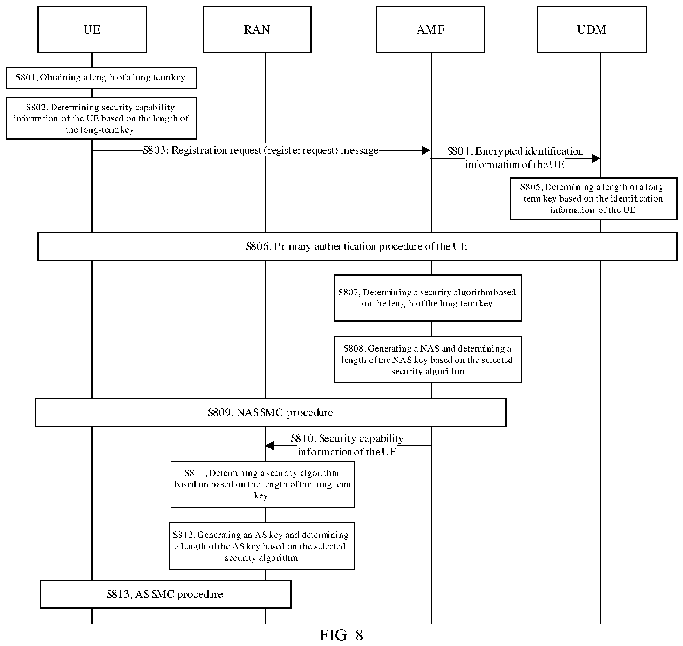

FIG. 8 is a schematic flowchart of a communication method according to this application; The method includes the following several steps:
S801. UE obtains a length of a long-term key.

Specifically, for the long-term key, refer to the description in S701.

For example, the UE obtains the length of the long-term key from the USIM card. For example, the UE sends a request message to the USIM card, where the request message is used to request the length of the long-term key. In response to the request message, the USIM card sends the length of the long-term key to the UE. It may be understood that a dedicated interface is enabled in the USIM card to respond to a key length request sent by the UE to the USIM. For example, the request may be sent after PIN authentication.

Alternatively, the UE stores the length of the long-term key. For example, the UE includes the length of the long-term key obtained by using the method shown in FIG. 7. If the UE does not detect that the USIM card is changed, the UE stores the information about the length of the long-term key.

Alternatively, the UE obtains the length of the long-term key from the network device or the access network device. For example, refer to a case in which the indication information #2 is carried in steps S711 to S714.

S802. The UE determines security capability information (denoted as security capability information #1) of the UE based on the length of the long-term key.

The security capability information of the UE indicates a security algorithm supported by the UE. A length of an input key of a security algorithm supported by the UE is less than or equal to a length of the length key.

For example, the UE may determine the security capability information #1 based on configured security capability information of the UE. The security algorithm supported by the UE indicated by the security capability information #1 is a security algorithm that is in the security algorithms supported by the terminal device and that are indicated by the configured UE security capability information and that have a length of an input key less than or equal to a length of the first key.

S803. The UE sends a registration request (registration request) message to the AMF by using the RAN. Correspondingly, the AMF receives the registration request message from the UE.

For the registration request, refer to the description in S701.

The registration request carries security capability information (security capability information #1) of the UE.

For example, if the length of the long-term key is 128 bits, the UE reports, by using the security capability information, only a security algorithm whose input is 128.

If the length of the long-term key is 256 bits, the UE reports and inputs a 128-bit and/or 256-bit security algorithm by using the security capability information.

S804. The AMF sends identification information of the UE to the UDM. Correspondingly, the UDM receives the identification information of the UE from the AMF.

S805. The UDM determines a length of a long-term key based on the identification information of the UE.

For this step, refer to the description in S703.

For example, the length of the long-term key is 128 bits or 256 bits.

S806. The network side and the UE perform a primary authentication procedure.

For example, the primary authentication procedure of the network side and the UE may complete identity authentication of the UE and the network side and derive keys at each layer.

Optionally, when deriving the key, the UDM may select, based on a length of the long-term key K, a length of an input of a used key derivation algorithm.

Specifically, when the long-term key is 128 bits, the UDM may select a 128-bit key derivation algorithm, and obtain a 128-bit CK and an IK, so that each network element derives a 256-bit key, for example, a 256-bit KAUSF, a KSEAF, or a KAMF.

When the long-term key is 256 bits, the UDM may select a 256-bit key derivation algorithm, and obtain a 256-bit CK and an IK, so that each network element derives a 512-bit key, for example, a 512-bit KAUSF, a KSEAF, or a KAMF.

S807. The AMF determines a security algorithm based on the security capability information of the UE and a configured algorithm priority list.

For example, the AMF selects a security algorithm with a higher priority from security algorithms supported by both the UE and the network side.

S808. The AMF generates a NAS key (an example of a security key), and determines a length of the NAS key based on the selected security algorithm.

For example, the AMF generates a NAS key based on KAMF. For example, the NAS key is KNASint and KNASenc. A length of the NAS key is consistent with a length of the security algorithm.

For details about this step, refer to the descriptions in S707.

Optionally, the method further includes the following step.

S809. The AMF and the UE perform a NAS SMC procedure. For details, refer to the description in FIG. 4.

Optionally, the method further includes S810 to S813.

S810. The AMF sends security capability information of the UE to the RAN. Correspondingly, the RAN receives the security capability information of the UE from the AMF.

S811. The RAN determines a security algorithm based on the security capability information of the UE and a configured algorithm priority list.

For this step, refer to the description in S807.

S812. The RAN generates an AS key (an example of a security key), and determines a length of the AS key based on the selected security algorithm.

For this step, refer to the description in S713.

S813. The RAN and the UE perform an AS SMC procedure. For details, refer to existing related descriptions.

For this step, refer to related descriptions of S612.

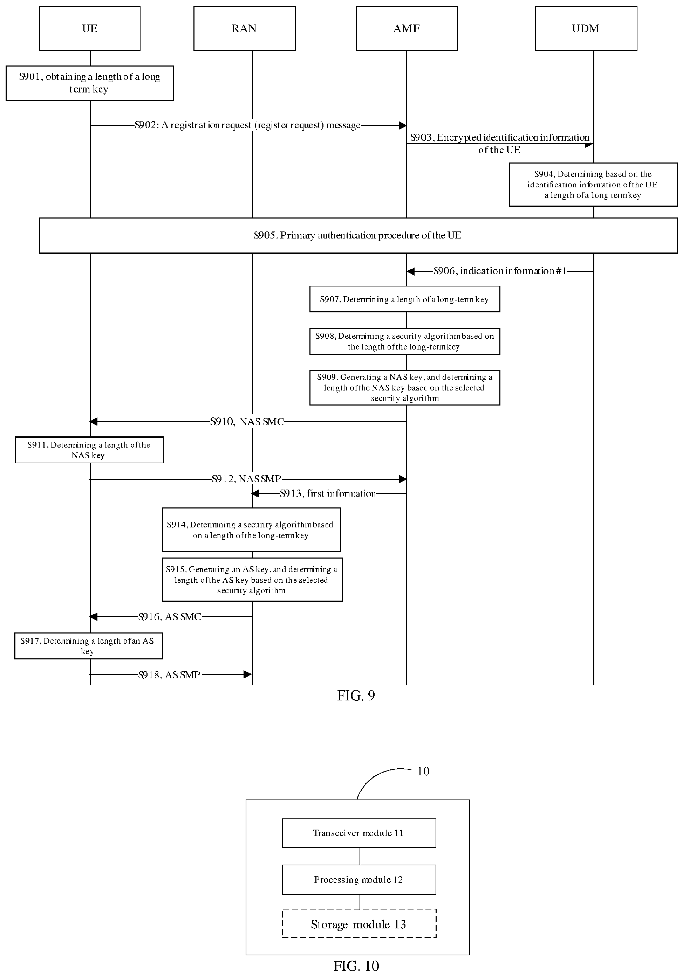

FIG. 9 is a schematic flowchart of a communication method according to this application. The method includes the following several steps:
S901. UE obtains a length of a long-term key.

Specifically, for the long-term key, refer to the description in S801.

For example, the UE obtains the length of the long-term key from the USIM card. For details about this step, refer to S801.

S902. The UE sends a registration request (registration request) message to the AMF by using the RAN. Correspondingly, the AMF receives the registration request message from the UE.

For the registration request, refer to the description in S701.

The registration request carries indication information #2 and security capability information of the UE.

The indication information #2 indicates a length of the long-term key. Optionally, the indication information #2 may be encrypted. The length information of the long-term key may be protected by encrypting the indication information #2. A specific encryption manner may be encryption by using a network-side public key for encrypting the SUPI (if no security context exists before), or may be encryption by using a previous NAS key (if a security context exists before). The security capability information of the UE indicates a security algorithm supported by the UE.

S903. The AMF sends identification information of the UE and indication information #2 to the UDM. Correspondingly, the UDM receives the identification information of the UE and the indication information #2 from the AMF.

S904. The UDM determines a length of a long-term key based on the identification information of the UE.

For this step, refer to the description in S805.

For example, the length of the long-term key is 128 bits or 256 bits.

In a possible implementation, the UDM decrypts the indication information #2, to obtain the length of the long-term key sent by the UE, and compares the length with the length of the long-term key obtained through retrieval by using the identification information of the UE. If the two lengths are different, the UDM sends error information, and does not perform a subsequent step.

S905. The network side and the UE perform a primary authentication procedure.

For example, the primary authentication procedure of the network side and the UE may complete identity authentication of the UE and the network side and derive keys at each layer.

Optionally, when deriving the key, the UDM may select an input length of a used key derivation algorithm based on a length of the long-term key K.

S906. The UDM sends indication information #1 to the AMF. Correspondingly, the AMF receives the indication information #1 from the gNB.

The indication information #1 indicates a length of the long-term key K.

S907. The AMF determines a length of a long-term key.

For example, the AMF may compare lengths of the long-term keys in the indication information #2 and the indication information #1.

It should be noted that when the long-term key is encrypted by using the NAS key, the AMF may compare lengths of the long-term key in the indication information #4 and the long-term key in the indication information #1. When the long-term key is encrypted by using the public key of the home network, UDM decryption and comparison need to be performed by using a related step in S904.

If the length of the long-term key indicated by the indication information #2 is consistent with the length of the long-term key indicated by the indication information #1, it is determined that the length of the long-term key is the length of the long-term key indicated by the indication information #1 or the indication information #2.

If the length of the long-term key indicated by the indication information #2 is inconsistent with the length of the long-term key indicated by the indication information #1, an error is reported, and a subsequent step is not performed.

S908. The AMF determines a security algorithm based on the length of the long-term key.

Specifically, the AMF may determine the security algorithm based on the length of the long-term key, the security capability information of the UE, and the configured algorithm priority list. For this step, refer to the description in S706.

S909. The AMF generates a NAS key, and determines a length of the NAS key based on the selected security algorithm.

For this step, refer to the description in S707.

S910. The AMF sends the NAS SMC message to the UE. Correspondingly, the UE receives the NAS SMC from the AMF.

For this step, refer to the existing related description.

S911. The UE determines a length of a NAS key.

For example, the UE determines the length of the NAS key based on the length of the long-term key and the security algorithm that are obtained in S901. For details, refer to the first possible implementation in S709.

In another possible implementation, the UE may determine the length of the NAS key based on a length input into the security algorithm. For details, refer to the second possible implementation in S709.

S912. The UE sends a NAS SMP to the AMF. Correspondingly, the AMF receives the NAS SMP from the UE.

Alternatively,
S913. The AMF sends the first information to the RAN. Correspondingly, The RAN receives the first information from the AMF.

The first information may include security capability information of the UE and indication information #5, and the indication information #5 indicates a length of the long-term key.

S914. The RAN determines a security algorithm based on a length of the long-term key.

For a specific determining manner, refer to the description in S706. The length of the input of the security algorithm selected by the RAN may be 128 bits or 256 bits.

S915. The RAN generates an AS key (an example of a security key), and determines a length of the AS key based on the selected security algorithm.

A length of the AS key (for example, KRRCint and KRRCenc) is consistent with a length of the security algorithm.

Specifically, if the selected security algorithm is 128 bits, it is determined that the length of the AS key is 128 bits. For example, the RAN truncates the AS key generated based on the KgNB to 128 bits.

If the selected security algorithm is 256 bits, it is determined that the length of the AS key is 256 bits. If the length of the AS key generated by the AMF based on the KgNB is 512 bits, the AMF may truncate the key 512 to 256 bits.

S916. The RAN sends the AS SMC to the UE. Correspondingly, the UE receives the AS SMC from the RAN.

For this step, refer to related descriptions of S612.

S917. The UE determines a length of an AS key.

For example, the AS key is KUPint and KUPenc.

For example, the UE determines the length of the AS key based on the length of the long-term key and the security algorithm that are obtained in S901.

Alternatively, the UE may determine the length of the AS key based on a length of an input of the security algorithm.

For a specific determining manner, refer to the description in S709. A length of the AS key may be 128 bits or 256 bits.

S918. The UE sends an AS SMP to the RAN. Correspondingly, the RAN receives the AS SMP from the UE.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device (for example, a network device or a terminal device) in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by the device (such as the core network device, the access network device, or the terminal device) may also be implemented by a component (such as a chip or a circuit) of the device.

The foregoing describes in detail the communication methods provided in embodiments of this application with reference to FIG. 5 to FIG. 9A and FIG. 9B. The communication method is mainly described from a perspective of interaction between a core network device (for example, a first core network device or a second core network device), an access network device, and a terminal device. It may be understood that to implement the foregoing functions, the core network element and the terminal device include a corresponding hardware structure and/or software module used to perform each function.

A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The following describes in detail communication apparatuses provided in this application with reference to FIG. 10 to FIG. 12. It should be understood that descriptions of apparatus embodiments correspond to the descriptions of the method embodiments. Therefore, for content that is not described in detail, refer to the foregoing method embodiments. For brevity, some content is not described again.

In embodiments of this application, functional modules of a transmitter device or a receiver device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 10 is a block diagram of a communication apparatus 10 according to an embodiment of this application; The apparatus 10 includes a transceiver module 11 and a processing module 12. The transceiver module 11 may implement a corresponding communication function, and the processing module 12 is configured to perform data processing; or the transceiver module 11 is configured to perform receiving and sending related operations, and the processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement actions of a device in the foregoing method embodiments.

In a design, the apparatus 10 may be corresponding to the core network device (for example, the first core network device or the second core network device) in the foregoing method embodiment, or may be a component (for example, a chip) of the core network device.

The apparatus 10 may implement corresponding steps or procedures performed by the access network device in the foregoing method embodiment. The transceiver module 11 may be configured to perform receiving-related and sending-related operations of the access network device in the foregoing method embodiments, and the processing module 12 may be configured to perform a processing-related operation of the access network device in the foregoing method embodiments.

It should be understood that a specific process in which the units perform the foregoing corresponding steps is described in detail in the foregoing method embodiments, and for brevity, details are not described herein.

In another design, the apparatus 10 may correspond to the access network device in the foregoing method embodiment, or may be a component (for example, a chip) of the access network device.

The apparatus 10 may implement corresponding steps or procedures performed by the access network device in the foregoing method embodiment. The transceiver module 11 may be configured to perform receiving-related and sending-related operations of the access network device in the foregoing method embodiments, and the processing module 12 may be configured to perform a processing-related operation of the access network device in the foregoing method embodiments.

It should be understood that a specific process in which the units perform the foregoing corresponding steps is described in detail in the foregoing method embodiments, and for brevity, details are not described herein.

In another design, the apparatus 10 may correspond to the terminal device in the foregoing method embodiments, or may be a component (for example, a chip) of the terminal device.

The apparatus 10 may implement corresponding steps or procedures performed by the terminal device in the foregoing method embodiments. The transceiver module 11 may be configured to perform receiving-related and sending-related operations of the terminal device in the foregoing method embodiments, and the processing module 12 may be configured to perform a processing-related operation of the terminal device in the foregoing method embodiments.

It should be understood that a specific process in which the units perform the foregoing corresponding steps is described in detail in the foregoing method embodiments, and for brevity, details are not described herein.

It should be further understood that the apparatus 10 herein is presented in a form of functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described function. In an optional example, a person skilled in the art may understand that the apparatus 10 may be specifically the access and mobility management network element in the foregoing embodiments, and the data management network element may be configured to perform procedures and/or steps corresponding to the access and mobility management network element or the data management network element in the foregoing method embodiments; or the apparatus 10 may be specifically the access network device in the foregoing embodiments, and may be configured to perform procedures and/or steps corresponding to the access network device in the foregoing method embodiments. To avoid repetition, details are not described herein again. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has a function of implementing corresponding steps performed by the devices (such as the core network device, the access network device, and the terminal device) in the foregoing methods. The function may be implemented by hardware, or may be implemented by hardware executing corresponding software. The hardware or the software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit like the processing module may be replaced with a processor, to respectively perform receiving and sending operations and related processing operations in the method embodiments.

In addition, the transceiver module 11 may alternatively be a transceiver circuit (for example, may include a receiving circuit and a sending circuit), and the processing module may be a processing circuit.

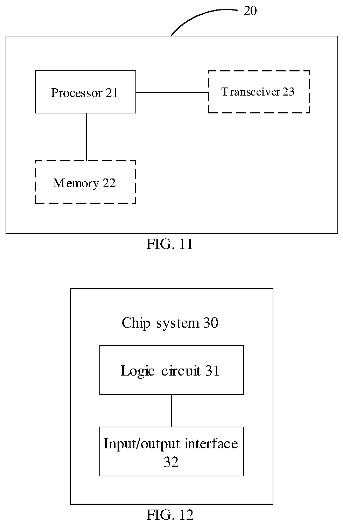

FIG. 11 is a diagram of another communication apparatus 20 according to an embodiment of this application; and The apparatus 20 includes a processor 21. The processor 21 is configured to execute a computer program or instructions stored in a memory 22, or read data/signaling stored in the memory 22, to perform the method in the foregoing method embodiments. Optionally, there are one or more processors 21.

Optionally, as shown in FIG. 11, the apparatus 20 further includes the memory 22, and the memory 22 is configured to store the computer program or instructions and/or data. The memory 22 and the processor 21 may be integrated together, or may be disposed separately. Optionally, there are one or more memories 22.

Optionally, as shown in FIG. 11, the apparatus 20 further includes a transceiver 23, and the transceiver 23 is configured to receive and/or send a signal. For example, the processor 21 is configured to control the transceiver 23 to receive a signal and/or send a signal.

In still another solution, the apparatus 20 is configured to implement operations performed by the access network device in the foregoing method embodiments.

In another solution, the apparatus 20 is configured to implement the operations performed by the core network device in the foregoing method embodiments.

In another solution, the apparatus 20 is configured to implement the operations performed by the terminal device in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

FIG. 12 is a diagram of a chip system 30 according to an embodiment of this application. The chip system 30 (which may also be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, to enable the chip system 30 to implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the terminal device, the access network device, or the core network device in the foregoing method embodiments.

For example, the logic circuit 31 is configured to implement processing-related operations performed by the terminal device, the access network device, and the core network device in the foregoing method embodiments. The input/output interface 32 is configured to implement sending-and/or receiving-related operations performed by the terminal device, the access network device, and the core network device in the foregoing method embodiments.

An embodiment of this application further provides a computer-readable storage medium. The computer-readable storage medium stores computer instructions for implementing the methods performed by the access device or the terminal device in the foregoing method embodiments.

For example, when a computer program is executed by a computer, the computer is enabled to implement the method performed by the access network device or the terminal device in the foregoing method embodiments.

An embodiment of this application further provides a computer program product, including instructions. When the instructions are executed by a computer, the methods performed by the access network device or the terminal device in the foregoing method embodiments are implemented.

An embodiment of this application further provides a communications system, including the foregoing core network device, access network device, and terminal device.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a network device, first indication information, wherein the first indication information indicates a length of a first key, and the first key is a key of a terminal device;
determining, by the network device, a first security algorithm based on the length of the first key, wherein a length of an input key of the first security algorithm is less than or equal to the length of the first key; and
transmitting, by the network device, a message with the terminal device, wherein the message is a message on which security protection is performed based on the first security algorithm.

2. The method according to claim 1, wherein the network device is a first core network device, and the receiving, by the network device, the first indication information comprises:
receiving, by the network device, the first indication information from a second core network device and/or the terminal device.

3. The method according to claim 1, wherein the network device is an access network device, and the receiving, by the network device, the first indication information comprises:
receiving, by the network device, the first indication information from a first core network device and/or the terminal device.

4. The method according to any one of claims 1 to 3, wherein the determining, by the network device, the first security algorithm based on the length of the first key comprises:
determining, by the network device, the first security algorithm based on the length of the first key, security capability information of the terminal device, and an algorithm priority list, wherein the security capability information of the terminal device indicates security algorithms supported by the terminal device, and the algorithm priority list indicates priorities of security algorithms supported by a network side.

5. The method according to claim 4, wherein the first security algorithm is one of the security algorithms supported by the terminal device, a priority of the first security algorithm is higher than a priority of a second security algorithm in the algorithm priority list, and the second security algorithm comprises a security algorithm, other than the first security algorithm, that is in the security algorithms supported by the terminal device and has an input key whose length is less than or equal to the length of the first key.

6. The method according to any one of claims 1 to 5, wherein the method further comprises:
determining, by the network device, a length of a security key based on the first security algorithm, wherein the security key is a key used by the security algorithm, and the length of the security key is the same as the length of the input key of the first security algorithm.

7. The method according to any one of claims 1 to 6, wherein the method further comprises:
sending, by the network device, second indication information to the terminal device, wherein the second indication information indicates the length of the first key, the length of the first key is used to determine a length of a key output by a key derivation algorithm, the output key is used to generate the security key, and the security key is the key used by the security algorithm.

8. A communication method, comprising:
sending first indication information to a network device, wherein the first indication information indicates a length of a first key, the first key is a key used by a terminal device, the length of the first key is used by the first core network device to determine a length of an input key of a first security algorithm, and the length of the input key of the first security algorithm is less than or equal to the length of the first key; and
transmitting a message with the network device, wherein the message is a message on which security protection is performed based on the first security algorithm.

9. The method according to claim 8, wherein before the sending the first indication information to the network device, the method further comprises:
obtaining the length of the first key from a subscriber identity identification module.

10. The method according to claim 8 or 9, wherein before the transmitting the message with the network device, the method further comprises:
determining, based on the length of the first key, a length of a key output by a key derivation algorithm, wherein the key output by the key derivation algorithm is used to generate a security key, and the security key is a key used by the first security algorithm.

11. A communication method, comprising:
determining a length of a first key of a terminal device; and
sending first indication information to a first core network device, wherein the first indication information indicates the length of the first key, the length of the first key is used to determine a length of an input key of a first security algorithm, the length of the input key of the first security algorithm is less than or equal to the length of the first key, and the first security algorithm is used to perform security protection on a message transmitted with the terminal device.

12. The method according to claim 11, wherein the determining the length of the first key of the terminal device comprises:
receiving identification information of the terminal device from the first core network device; and
determining the length of the first key based on the identification information of the terminal device.

13. The method according to claim 11 or 12, wherein the method further comprises:
determining, based on the length of the first key, a length of a key output by a key derivation algorithm, wherein the output key is used to generate a security key, and the security key is a key used by the security algorithm.

14. A communication method, comprising:
sending security capability information of a terminal device to a network device, wherein the security capability information indicates security algorithms supported by the terminal device, lengths of input keys of the security algorithms supported by the terminal device are less than or equal to a length of a first key, the first key is a key of the terminal device, and the security capability information of the terminal device is used by a first core network device to determine a first security algorithm; and
transmitting a message with the network device, wherein the message is a message on which security protection is performed based on the first security algorithm.

15. The method according to claim 14, wherein before the sending the security capability information of the terminal device to the network device, the method further comprises:
obtaining the length of the first key from a subscriber identity identification module.

16. The method according to claim 14 or 15, wherein before the transmitting the message with the network device, the method further comprises:
determining, based on the length of the first key and security capability information configured in the terminal device, the security capability information of the terminal device to be sent to the network device.

17. The method according to any one of claims 14 to 16, wherein before the transmitting the message with the network device, the method further comprises:
determining, based on the length of the first key, a length of a key output by a key derivation algorithm, wherein the key output by the key derivation algorithm is used to generate a security key, and the security key is a key used by the first security algorithm.

18. A communication method, comprising:
receiving security capability information of a terminal device, wherein the security capability information indicates security algorithms supported by the terminal device, lengths of input keys of the security algorithms supported by the terminal device are less than or equal to a length of a first key, and the first key is a key of the terminal device; and
transmitting a message with the terminal device, wherein the message is a message on which security protection is performed based on a first security algorithm, and the first security algorithm is one of the security algorithms supported by the terminal device.

19. The method according to claim 18, wherein before the transmitting the message with the terminal device, the method further comprises:
determining the first security algorithm based on the security capability information of the terminal device and an algorithm priority list, wherein a priority of the first security algorithm is higher than that of a security algorithm that is comprised in the algorithm priority list and that is supported by the terminal device other than the first security algorithm.

20. The method according to claim 18 or 19, wherein the method further comprises:
determining a length of a security key based on the first security algorithm, wherein the security key is a key used by the security algorithm, and the length of the security key is the same as a length of an input key of the first security algorithm.

21. A communication apparatus, comprising: one or more functional modules configured to perform the method according to any one of claims 1 to 7, one or more functional modules configured to perform the method according to any one of claims 8 to 10, one or more functional modules configured to perform the method according to any one of claims 11 to 13, one or more functional modules configured to perform the method according to any one of claims 14 to 17, or one or more functional modules configured to perform the method according to any one of claims 18 to 20.

22. A communication apparatus, comprising:
a processor, configured to execute a computer program stored in a memory, to cause the apparatus to perform the method according to any one of claims 1 to 7, perform the method according to any one of claims 8 to 10, perform the method according to any one of claims 11 to 13, perform the method according to any one of claims 14 to 17, or perform the method according to any one of claims 18 to 20.

23. A computer-readable storage medium, wherein the computer-readable storage medium stores a computer program; and when the computer program is run on a computer, the computer is caused to perform the method according to any one of claims 1 to 20.

24. A chip, wherein the chip is installed on a communication apparatus, the chip comprises a processor and a communication interface, and when the processor reads instructions through the communication interface and runs the instructions, the communication apparatus is caused to perform the method according to any one of claims 1 to 20.

25. A computer program product, wherein the computer program product comprises computer program code; and when the computer program code is run by a communication apparatus, the method according to any one of claims 1 to 20 is implemented.
